(19) Europäisches Patentamt
European Patent Office
Office européen des brevets

(11) EP 3 597 613 A1

(12) # EUROPEAN PATENT APPLICATION
published in accordance with Art. 153(4) EPC

(43) Date of publication:
**22.01.2020 Bulletin 2020/04**

(21) Application number: **18768365.1**

(22) Date of filing: **14.03.2018**

(51) Int Cl.:
***C03C 27/12*** $^{(2006.01)}$ ***B32B 17/10*** $^{(2006.01)}$
***B32B 27/30*** $^{(2006.01)}$ ***B60J 1/02*** $^{(2006.01)}$

(86) International application number:
**PCT/JP2018/009895**

(87) International publication number:
**WO 2018/168904 (20.09.2018 Gazette 2018/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.03.2017 JP 2017050268**

(71) Applicant: **Sekisui Chemical Co., Ltd.**
**Osaka-shi, Osaka 530-8565 (JP)**

(72) Inventors:
- **NISHINO, Hiromitsu**
  **Kouka-shi**
  **Shiga 528-8585 (JP)**
- **KIDO, Koji**
  **Kouka-shi**
  **Shiga 528-8585 (JP)**
- **OOTA, Yuusuke**
  **Kouka-shi**
  **Shiga 528-8585 (JP)**

(74) Representative: **Ter Meer Steinmeister & Partner Patentanwälte mbB**
**Nymphenburger Straße 4**
**80335 München (DE)**

(54) **INTERMEDIATE FILM FOR LAMINATED GLASSES, AND LAMINATED GLASS**

(57) Provided is an interlayer film for laminated glass with which change in partial wedge angle can be suppressed at the time of preparation of laminated glass, and double images can be suppressed in the laminated glass. The interlayer film for laminated glass according to the present invention has one end, and the other end having a larger thickness than the one end; the thickness of the interlayer film does not increase evenly from the one end toward the other end, and an average rate of change in partial wedge angle determined by the following formula (X) is 10% or less when an interlayer film finally pressure-bonded is obtained through a predetermined process using the interlayer film for laminated glass as an interlayer film before pressure-bonding, and each partial wedge angle is measured in each of the interlayer film before pressure-bonding and the interlayer film after final pressure-bonding.

final pressure-bonding. Rate of change in partial wedge angle (%) = |(Partial wedge angle of interlayer film after final pressure-bonding - Partial wedge angle of interlayer film before pressure-bonding)/(Partial wedge angle of interlayer film before pressure-bonding)| × 100 ··· Formula (X)

EP 3 597 613 A1

[FIG. 1.]

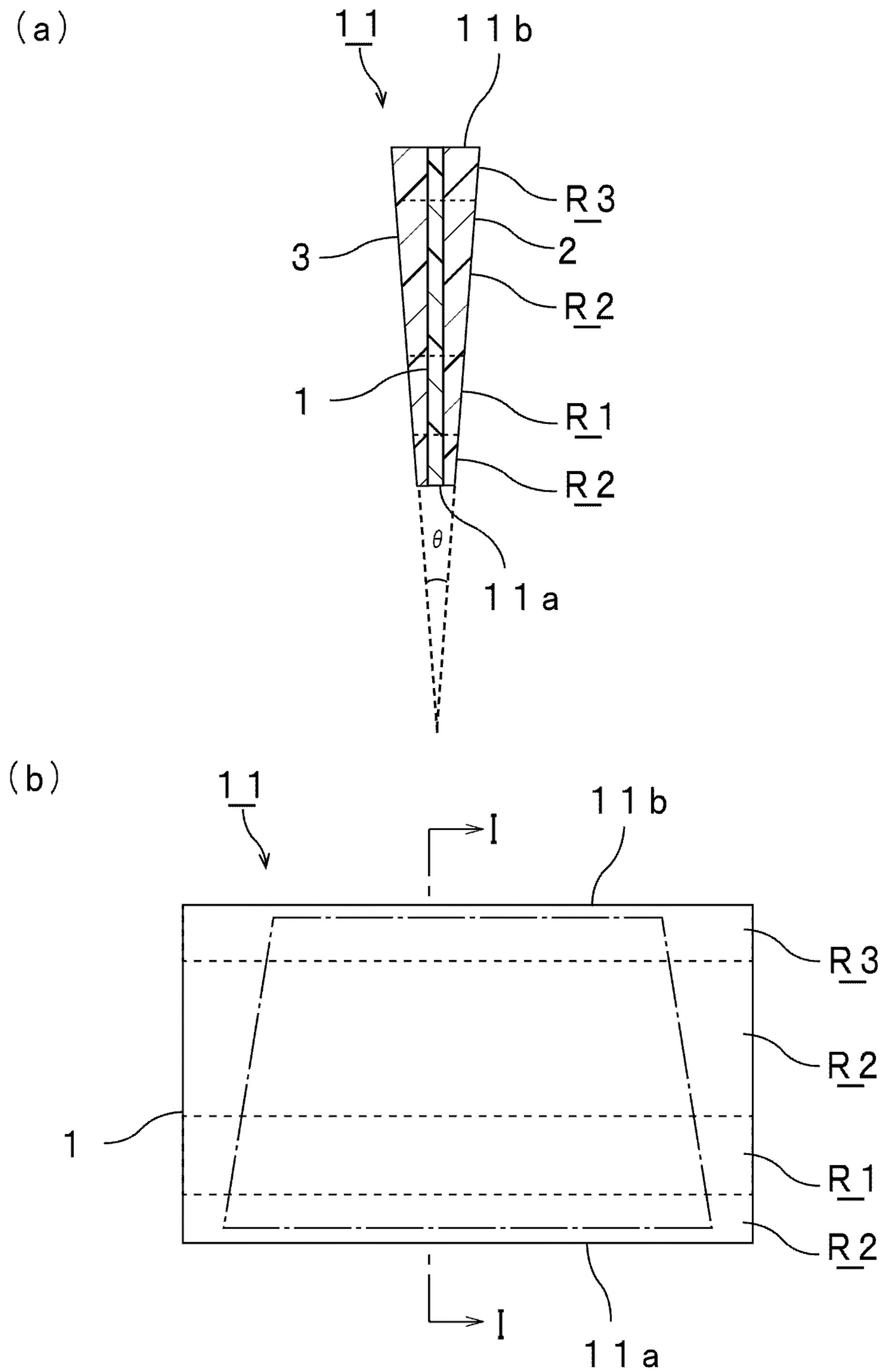

## Description

### TECHNICAL FIELD

The present invention relates to an interlayer film for laminated glass which is used for obtaining laminated glass. Moreover, the present invention relates to laminated glass prepared with the interlayer film for laminated glass.

### BACKGROUND ART

Since laminated glass generally generates only a small amount of scattering glass fragments even when subjected to external impact and broken, laminated glass is excellent in safety. As such, the laminated glass is widely used for automobiles, railway vehicles, aircraft, ships, buildings and the like. The laminated glass is produced by sandwiching an interlayer film for laminated glass between a pair of glass plates.

Moreover, as the laminated glass used for automobiles, a head-up display (HUD) has been known. In the HUD, on the windshield of an automobile, measured information such as the speed which is traveling data of the automobile and the like can be displayed.

In the HUD, there is a problem that the measured information displayed on the windshield is doubly observed.

In order to suppress double images, a wedge-shaped interlayer film has been used. The following Patent Document 1 discloses a sheet of laminated glass in which a wedge-shaped interlayer film having a prescribed wedge angle is sandwiched between a pair of glass plates. In such a sheet of laminated glass, by the adjustment of the wedge angle of the interlayer film, a display of measured information reflected by one glass plate and a display of measured information reflected by the other glass plate can be focused into one point to make an image in the visual field of a driver. For that reason, the display of measured information is hard to be observed doubly and the visibility of a driver is hardly hindered.

### Related Art Document

### Patent Document

Patent Document 1: JP H4-502525 T

### SUMMARY OF THE INVENTION

### PROBLEMS TO BE SOLVED BY THE INVENTION

Before producing laminated glass, an interlayer film is prepared to have a predetermined wedge angle so as to suppress double images. However, in a conventional interlayer film, the wedge angle of the interlayer film can largely change at the time of pressure-bonding in preparation of laminated glass. As a result, it is sometimes the case that double images cannot be suppressed sufficiently.

An object of the present invention is to provide an interlayer film for laminated glass with which change in partial wedge angle can be suppressed at the time of preparation of laminated glass, and double images can be suppressed in the laminated glass. Moreover, the present invention also aims at providing laminated glass prepared with the above-mentioned interlayer film for laminated glass.

### MEANS FOR SOLVING THE PROBLEMS

According to a broad aspect of the present invention, there is provided an interlayer film for laminated glass (in the present specification, "interlayer film for laminated glass" is sometimes abbreviated as "interlayer film") to be used in laminated glass, the interlayer film having one end, and the other end being at the opposite side of the one end, the other end having a thickness larger than that of the one end, the thickness of the interlayer film not increasing evenly from the one end to the other end, an average rate of change in partial wedge angle determined by the following formula (X) being 10% or less when an interlayer film finally pressure-bonded is obtained through the following first, second, third, fourth and fifth steps in this order by using the interlayer film for laminated glass as an interlayer film before pressure-bonding, and in each of the interlayer film before pressure-bonding and the interlayer film after final pressure-bonding, each partial wedge angle at each point of every 10 mm intervals in a first region from a position of 40 mm from the one end toward the other end of the interlayer film, to a middle position between the one end and the other end is measured.

Rate of change in partial wedge angle (%) = |(Partial wedge angle of interlayer film after final pressure-bonding - Partial wedge angle of interlayer film before pressure-bonding)/(Partial wedge angle of interlayer film before pressure-bonding)| × 100 ··· Formula (X)

First step: Place an interlayer film before pressure-bonding on a first glass plate from one surface side. The first glass plate has the same size as the interlayer film before pressure-bonding, and has a thickness of 2 mm. The first glass plate is a float plate glass in accordance with JIS 3202-2011.

Second step: Place a second glass plate on the other surface of the interlayer film in such a manner that one end of the second glass plate is aligned with the one end of the interlayer film and the planar direction of the second glass plate is perpendicular to the planar direction of the first glass plate. The second glass plate has the same size as the interlayer film before pressure-bonding, and has a thickness of 2 mm. The second glass plate is a float plate glass in accordance with JIS 3202-2011.

Third step: Tilt the second glass plate while fixing the one end of the second glass plate to bring the surface of the second glass plate into contact with the other surface of the interlayer film, and make the second glass into the condition that the weight of the second glass is balanced on the other surface of the interlayer film.

Fourth step: Preliminarily pressure bond with a roll press at 240°C and a linear pressure of 98 N/cm.

Fifth step: Finally pressure bond at 140°C and a pressure of 1.3 MPa to give an interlayer film finally pressure-bonded. The obtained interlayer film finally pressure-bonded is in such a laminate state in which the interlayer film finally pressure-bonded is arranged between the first glass plate and the second glass plate.

In a specific aspect of the interlayer film according to the present invention, when each partial wedge angle is measured at each point of every 10 mm interval in a second region from a position of 40 mm from the one end toward the other end, to a position of 40 mm from the other end toward the one end of the interlayer film, a maximum value of the rate of change in partial wedge angle determined by the formula (X) is 15% or less.

In a specific aspect of the interlayer film according to the present invention, the interlayer film is an interlayer film for laminated glass in which the interlayer film and the second glass plate are in contact with each other at separated two or more points in a region from the position of the one end of the interlayer film to the middle position between the one end and the other end, after the third step and before the fourth step in obtaining an interlayer film finally pressure-bonded thorough the first, second, third, fourth and fifth steps in this order.

In a specific aspect of the interlayer film according to the present invention, the interlayer film is an interlayer film for laminated glass in which the interlayer film and the second glass plate are in contact with each other at separated three or more points in a region from the position of the one end to the position of the other end of the interlayer film, after the third step and before the fourth step in obtaining an interlayer film finally pressure-bonded thorough the first, second, third, fourth and fifth steps in this order.

In a specific aspect of the interlayer film according to the present invention, the interlayer film includes a layer having a modulus of elasticity G' at 23°C of 4 MPa or more.

In a specific aspect of the interlayer film according to the present invention, the interlayer film includes a layer having a modulus of elasticity G' at 23°C of 4 MPa or more as a surface layer.

It is preferred that the interlayer film contain a thermoplastic resin. It is preferred that the interlayer film contain a plasticizer.

In a specific aspect of the interlayer film according to the present invention, the interlayer film includes a layer containing a thermoplastic resin, and a plasticizer in a content of 25 parts by weight or more and 45 parts by weight or less, relative to 100 parts by weight of the thermoplastic resin.

In a specific aspect of the interlayer film according to the present invention, the interlayer film includes a first layer, and a second layer arranged on a first surface side of the first layer.

In a specific aspect of the interlayer film according to the present invention, the first layer contains a polyvinyl acetal resin, the second layer contains a polyvinyl acetal resin, and the content of the hydroxyl group of the polyvinyl acetal resin in the first layer is lower than the content of the hydroxyl group of the polyvinyl acetal resin in the second layer.

In a specific aspect of the interlayer film according to the present invention, the first layer contains a polyvinyl acetal resin, the second layer contains a polyvinyl acetal resin, the first layer contains a plasticizer, the second layer contains a plasticizer, and the content of the plasticizer in the first layer relative to 100 parts by weight of the polyvinyl acetal resin in the first layer is larger than the content of the plasticizer in the second layer relative to 100 parts by weight

of the polyvinyl acetal resin in the second layer.

According to a broad aspect of the present invention, there is provided a laminated glass including a first lamination glass member, a second lamination glass member, and an interlayer film part arranged between the first lamination glass member and the second lamination glass member, the interlayer film part being formed of the interlayer film for laminated glass described above.

## EFFECT OF THE INVENTION

The interlayer film for laminated glass according to the present invention is an interlayer film for laminated glass used in laminated glass. The interlayer film for laminated glass according to the present invention has one end and the other end being at the opposite side of the one end, and the other end has a thickness that is larger than a thickness of the one end. In the interlayer film for laminated glass according to the present invention, the thickness of the interlayer film does not increase evenly from the one end toward the other end. Using the interlayer film for laminated glass according to the present invention as an interlayer film before pressure-bonding, an interlayer film finally pressure-bonded is obtained through the first, second, third, fourth and fifth steps in this order. In each of the interlayer film before pressure-bonding and the interlayer film after final pressure-bonding, each partial wedge angle is measured at each point of every 10 mm interval in a first region from the position of 40 mm from the one end toward the other end of the interlayer film to the middle position between the one end and the other end. In this measurement, an average rate of change in partial wedge angle determined by the above formula (X) is 10% or less in the interlayer film for laminated glass according to the present invention. Since the interlayer film for laminated glass according to the present invention is provided with the aforementioned configuration, it is possible to suppress change in partial wedge angle at the time of preparation of laminated glass using an interlayer film for laminated glass according to the present invention, and it is possible to suppress double images in the laminated glass prepared with the interlayer film for laminated glass according to the present invention.

## BRIEF DESCRIPTION OF DRAWINGS

[Fig. 1] Figs. 1(a) and (b) are a sectional view and a front view, respectively, schematically showing an interlayer film for laminated glass, in accordance with a first embodiment of the present invention.

[Fig. 2] Figs. 2(a) and (b) are a sectional view and a front view, respectively, schematically showing an interlayer film for laminated glass, in accordance with a second embodiment of the present invention.

[Fig. 3] Fig. 3 is a sectional view showing an example of laminated glass prepared with the interlayer film for laminated glass shown in Fig. 1.

[Fig. 4] Fig. 4 is a perspective view schematically showing a roll body prepared by winding the interlayer film for laminated glass shown in Fig. 1.

## MODE(S) FOR CARRYING OUT THE INVENTION

Hereinafter, the details of the present invention will be described.

The interlayer film for laminated glass (in the present specification, sometimes abbreviated as "interlayer film") according to the present invention is used for laminated glass.

The interlayer film according to the present invention has a one-layer structure or a two or more-layer structure. The interlayer film according to the present invention may have a one-layer structure and may have a two or more-layer structure. The interlayer film according to the present invention may have a two-layer structure, may have a two or more-layer structure, may have a three-layer structure and may have a three or more-layer structure. The interlayer film according to the present invention may be a single-layered interlayer film and may be a multi-layered interlayer film.

The interlayer film according to the present invention has one end and the other end being at the opposite side of the one end. The one end and the other end are end portions of both sides facing each other in the interlayer film. In the interlayer film according to the present invention, the thickness of the other end is larger than the thickness of the one end.

In the interlayer film according to the present invention, the thickness does not increase evenly from the one end toward the other end of the interlayer film. The interlayer film according to the present invention may have a projecting part on the surface, or a recess part on the surface.

A first glass plate having the same size with the interlayer film according to the present invention, and a thickness of 2 mm is prepared. The first glass plate is a float plate glass in accordance with JIS 3202-2011. A second glass plate having the same size with the interlayer film according to the present invention, and a thickness of 2 mm is prepared.

The second glass plate is a float plate glass in accordance with JIS 3202-2011. Using the interlayer film according to the present invention as an interlayer film before pressure-bonding, an interlayer film finally pressure-bonded is obtained through the following first, second, third, fourth and fifth steps in this order.

First step: Place an interlayer film before pressure-bonding on a first glass plate from one surface side. The first glass plate has the same size as the interlayer film before pressure-bonding, and has a thickness of 2 mm. The first glass plate is a float plate glass in accordance with JIS 3202-2011.

Second step: Place a second glass plate on the other surface of the interlayer film in such a manner that one end of the second glass plate is aligned with the one end of the interlayer film and the planar direction of the second glass plate is perpendicular to the planar direction of the first glass plate. The second glass plate has the same size as the interlayer film before pressure-bonding, and has a thickness of 2 mm. The second glass plate is a float plate glass in accordance with JIS 3202-2011.

Third step: Tilt the second glass plate while fixing the one end of the second glass plate to bring the surface of the second glass plate into contact with the other surface of the interlayer film, and make the second glass into the condition that the weight of the second glass is balanced on the other surface of the interlayer film.

Fourth step: Preliminarily pressure bond with a roll press at 240°C and a linear pressure of 98 N/cm.

Fifth step: Finally pressure bond at 140°C and a pressure of 1.3 MPa to give an interlayer film finally pressure-bonded. The obtained interlayer film finally pressure-bonded is in such a laminate state in which the interlayer film finally pressure-bonded is arranged between the first glass plate and the second glass plate.

In each of the interlayer film before pressure-bonding and the interlayer film after final pressure-bonding, when each partial wedge angle is measured at each point of every 10 mm interval in a first region (first measurement region) from the position of 40 mm from the one end toward the other end of the interlayer film to the middle position between the one end and the other end, an average rate of change in partial wedge angle determined by the following formula (X) is 10% or less.

Rate of change in partial wedge angle (%) = |(Partial wedge angle of interlayer film after final pressure-bonding - Partial wedge angle of interlayer film before pressure-bonding)/(Partial wedge angle of interlayer film before pressure-bonding)| × 100 ··· Formula (X)

Since the present invention is provided with the aforementioned configuration, it is possible to suppress change in partial wedge angle at the time of preparation of laminated glass using an interlayer film according to the present invention, and it is possible to suppress double images in the laminated glass prepared with the interlayer film according to the present invention.

The average rate of change in partial wedge angle is determined by determining a rate of change in partial wedge angle at each point of every 10 mm interval in the first region (the first to the n-th points (n is an integer of 2 or more)), and averaging the rates of change in partial wedge angle.

From the viewpoint of suppressing the change in partial wedge angle more effectively at the time of preparation of laminated glass, and suppressing double images in laminated glass more effectively, the average rate of change in partial wedge angle determined by the above formula (X) in the measurement of respective partial wedge angles at the positions of every 10 mm interval in the first region is preferably 5% or less.

When a partial wedge angle is measured at the first to the n-th points (n is an integer of 2 or more), and n rates of change in partial wedge angle are determined, the average rate of change in partial wedge angle means a mean of the n rates of change in partial wedge angle.

Each partial wedge angle is measured at each point of every 10 mm interval in the second region (second measurement region) from the position of 40 mm from the one end toward the other end of the interlayer film according to the present invention, to the position of 40 mm from the other end toward the one end. In this measurement, the maximum value of the rate of change in partial wedge angle determined by the above formula (X) is preferably 15% or less, more preferably 10% or less, and further preferably 5% or less. When the maximum value is the aforementioned lower limit or more and the aforementioned upper limit or less, it is possible to suppress the change in partial wedge angle more effectively at the time of preparation of laminated glass, and suppress double images in laminated glass more effectively.

When a partial wedge angle is measured at the first to the n-th points (n is an integer of 2 or more), and n rates of change in partial wedge angle are determined, the maximum value of rate of change in partial wedge angle means a maximum value among n rates of change in partial wedge angle.

Concretely, rates of change in partial wedge angle at the first to the n-th points are determined by the following formula (X1) to (Xn).

Rate of change in partial wedge angle at the first point (%) = |(Partial wedge angle at the first point of the interlayer film after final pressure-bonding - Partial wedge angle at the first point of the interlayer film before pressure-bonding)/(Partial wedge angle at the first point of the interlayer film before pressure-bonding)| × 100 ··· Formula (X1)

Rate of change in partial wedge angle at the second point (%) = |(Partial wedge angle at the second point of the interlayer film after final pressure-bonding - Partial wedge angle at the second point of the interlayer film before pressure-bonding)/(Partial wedge angle at the second point of the interlayer film before pressure-bonding)| × 100 ··· Formula (X2)

(Description is omitted for Formula (X3) to Formula (Xn-1))

Rate of change in partial wedge angle at the n-th point (%) = |(Partial wedge angle at the n-th point of the interlayer film after final pressure-bonding - Partial wedge angle at the n-th point of the interlayer film before pressure-bonding)/(Partial wedge angle at the n-th point of the interlayer film before pressure-bonding)| × 100 ··· Formula (Xn)

When measurement is conducted in the first region, the first point is the point located closest to the one end among the points of every 10 mm interval in the first region. When measurement is conducted in the first region, the n-th point is the point located closest to the other end among the points of every 10 mm interval in the first region. When measurement is conducted in the second region, the first point is the point located closest to the one end among the points of every 10 mm interval in the second region. When measurement is conducted in the second region, the n-th point is the point located closest to the other end among the points of every 10 mm interval in the second region.

The first point is the point at 40 mm from the one end toward the other end of the interlayer film. The second point is the point at 50 mm from the one end toward the other end of the interlayer film. The n-th point is the point at (40 + 10 × (n - 1)) mm from the one end toward the other end of the interlayer film.

"n" corresponds to a total number of points where a partial wedge angle can be measured in respective measurements in the first region and the second region.

As described above, when measurement is conducted in the first region, the n-th point is the point located closest to the other end among the points of every 10 mm interval in the first region. When measurement is conducted in the first region, the n-th point is selected within the extent that it does not cross the middle position between the one end and the other end of the interlayer film into the other end side when each point (second point, third point, ···) is sequentially selected at every 10 mm interval from the first point. When measurement is conducted in the first region, the n-th point may coincide with the middle position between the one end and the other end of the interlayer film, or the n-th point may be located on the one end side of the middle position between the one end and the other end of the interlayer film. When measurement is conducted in the first region, the n-th point is not located on the other end side of the middle position between the one end and the other end of the interlayer film.

As described above, when measurement is conducted in the second region, the n-th point is the point located closest to the other end among the points of every 10 mm interval in the second region. When measurement is conducted in the second region, the n-th point is selected within the extent that it does not cross the position of 40 mm from the other end toward the one end of the interlayer film into the other end side when each point (second point, third point, ···) is sequentially selected at every 10 mm interval from the first point. When measurement is conducted in the second region, the n-th point may coincide with the middle position between the one end and the other end of the interlayer film, or the n-th point may be located on the one end side of the position of 40 mm from the other end toward the one end of the interlayer film. When measurement is conducted in the second region, the n-th point is not located on the other end side of the position of 40 mm from the other end toward the one end of the interlayer film.

When partial wedge angles are measured at the first to the n-th points (n is an integer of 2 or more), an average rate of change in partial wedge angle is determined by the following formula (Y).

Average rate of change in partial wedge angle (%) = (Rate of change in partial wedge angle at the first point + Rate of change in partial wedge angle at the second point +···+ Rate of change in partial wedge angle at the n-th point) / n ··· Formula (Y)

In the formula (Y), n is an integer of 2 or more. Also, "n" is a total number of points where a partial wedge angle can be measured.

Next, a concrete method for measuring a partial wedge angle at each point of every 10 mm interval for each of the interlayer film before pressure-bonding and the interlayer film after final pressure-bonding is described.

Concrete method for measuring partial wedge angle at each point of every 10 mm interval of interlayer film before pressure-bonding:

A method for determining a partial wedge angle at each point of every 10 mm interval of the interlayer film before pressure-bonding is as follows.

As a measuring device for use for measurement of a partial wedge angle at each point of every 10 mm interval of the interlayer film before pressure-bonding, a contact type thickness measuring instrument "TOF-4R" (available from Yamabun Electronics Co., Ltd.) or the like can be recited.

A method for determining a partial wedge angle at the first point is as follows. Thickness is measured at 41 points of every 2 mm interval from the one end of the interlayer film before pressure-bonding to the position of 80 mm

from the position of the one end toward the other end. A primary line is obtained by the least squares method by plotting the distance (unit: mm) of the point where the thickness is measured from the one end (position of x = 0 mm) toward the other end on the x-axis, and the thickness of the interlayer film before pressure-bonding (unit: μm) on the y axis. The interior angle formed by the obtained primary line and the line of y = 0 is regarded as a partial wedge angle at the first point.

A method for determining a partial wedge angle at the second point is as follows. Thickness is measured at 41 points of every 2 mm interval from the position of 10 mm from the one end toward the other end of the interlayer film before pressure-bonding, to the position of 90 mm from the one end toward the other end. A primary line is obtained by the least squares method by plotting the distance (unit: mm) of the point where the thickness is measured from the position of 20 mm from the one end (position of x = 0 mm) toward the other end on the x-axis, and the thickness of the interlayer film before pressure-bonding (unit: μm) on the y axis. The interior angle formed by the obtained primary line and the line of y = 0 is regarded as a partial wedge angle at the second point.

(Description is omitted for the method of determining a partial wedge angle at the third point to the n-1-th point)

A method for determining a partial wedge angle at the n-th point is as follows. Thickness is measured at 41 points of every 2 mm interval from the position of (20 - 10 × (n - 1)) mm from the one end toward the other end of the interlayer film before pressure-bonding, to the position of (100 - 10 × (n - 1)) mm from the one end toward the other end. A primary line is obtained by the least squares method by plotting the distance (unit: mm) of the point where the thickness is measured from the position of (20 - 10 × (n - 1)) mm from the one end (position of x = 0 mm) toward the other end on the x-axis, and the thickness of the interlayer film before pressure-bonding (unit: μm) on the y axis. The interior angle formed by the obtained primary line and the line of y = 0 is regarded as a partial wedge angle at the n-th point.

The respective partial wedge angles at the first to the n-th points can be collectively expressed as follows. Thickness is measured at 41 points of every 2 mm interval from the position of (10 × A) mm from the one end toward the other end of the interlayer film before pressure-bonding, to the position of (80 + 10 × A) mm from the one end toward the other end (A is an integer of 0 or more). A primary line is obtained by the least squares method by plotting the distance (unit: mm) of the point where the thickness is measured from the position of (10 × A) mm from the one end (position of x = 0 mm) toward the other end on the x-axis, and the thickness of the interlayer film before pressure-bonding (unit: μm) on the y axis. The interior angle formed by the obtained primary line and the line of y = 0 is regarded as a partial wedge angle at each of the first to n-th points.

Concrete method for measuring partial wedge angle at each point of every 10 mm interval of interlayer film after final pressure-bonding:

At each point of every 10 mm interval of the interlayer film after final pressure-bonding, a partial wedge angle is measured in the same manner as for the partial wedge angle at each point of every 10 mm interval of the interlayer film before final pressure-bonding.

As a measuring device for use for measurement of a partial wedge angle at each point of every 10 mm interval of the interlayer film after final pressure-bonding, a noncontact type multilayer film thickness measuring instrument "OPTIGAUGE" (available from Lumetrics, Inc.) or the like can be recited. In the measurement of a partial wedge angle after final pressure-bonding, the thickness of the interlayer film after final pressure-bonding can be measured in the form of a laminate.

A method for determining a partial wedge angle at the first point is as follows. Thickness is measured at 41 points of every 2 mm interval from the position of the one end of the interlayer film after final pressure-bonding to the position of 80 mm from the one end toward the other end. A primary line is obtained by the least squares method by plotting the distance (unit: mm) of the point where the thickness is measured from the one end (position of x = 0 mm) toward the other end on the x-axis, and the thickness of the interlayer film after final pressure-bonding (unit: μm) on the y axis. The interior angle formed by the obtained primary line and the line of y = 0 is regarded as a partial wedge angle at the first point.

A method for determining a partial wedge angle at the second point is as follows. Thickness is measured at 41 points of every 2 mm interval from the position of 10 mm from the one end toward the other end of the interlayer film after final pressure-bonding, to the position of 90 mm from the one end toward the other end. A primary line is obtained by the least squares method by plotting the distance (unit: mm) of the point where the thickness is measured from the position of 20 mm from the one end (position of x = 0 mm) toward the other end on the x-axis, and the thickness of the interlayer film after final pressure-bonding (unit: μm) on the y axis. The interior angle formed by the obtained primary line and the line of y = 0 is regarded as a partial wedge angle at the second point.

(Description is omitted for the method of determining a partial wedge angle at the third point to the n-1-th point)

A method for determining a partial wedge angle at the n-th point is as follows. Thickness is measured at 41 points of every 2 mm interval from the position of (20 - 10 × (n - 1)) mm from the one end toward the other end of the interlayer film after final pressure-bonding, to the position of (100 - 10 × (n - 1)) mm from the one end toward the other end. A primary line is obtained by the least squares method by plotting the distance (unit: mm) of the point where the thickness is measured from the position of (20 - 10 × (n - 1)) mm from the one end (position of x = 0 mm) toward the other end on the x-axis, and the thickness of the interlayer film after final pressure-bonding (unit: μm) on the y axis. The interior angle formed by the obtained primary line and the line of y = 0 is regarded as a partial wedge angle at the n-th point.

The respective partial wedge angles at the first to the n-th points can be collectively expressed as follows. Thickness is measured at 41 points of every 2 mm interval from the position of (10 × A) mm from the one end toward the other end of the interlayer film after final pressure-bonding, to the position of (80 + 10 × A) mm from the one end toward the other end (A is an integer of 0 or more). A primary line is obtained by the least squares method by plotting the distance (unit: mm) of the point where the thickness is measured from the position of (10 × A) mm from the one end (position of x = 0 mm) toward the other end on the x-axis, and the thickness of the interlayer film after final pressure-bonding (unit: μm) on the y axis. The interior angle formed by the obtained primary line and the line of y = 0 is regarded as a partial wedge angle at each of the first to n-th points.

The interlayer film preferably includes a layer having a modulus of elasticity G' at 23°C of 4 MPa or more, more preferably includes a layer having a modulus of elasticity G' at 23°C of 8 MPa or more, and further preferably includes a layer having a modulus of elasticity G' at 23°C of 20 MPa or more. When the modulus of elasticity G' at 23°C of the layer is the aforementioned lower limit or more, it is possible to suppress the change in partial wedge angle more effectively at the time of preparation of laminated glass, and suppress double images in laminated glass more effectively. The interlayer film preferably includes a layer having a modulus of elasticity G' at 23°C of 4 MPa or more as a surface layer, more preferably includes a layer having a modulus of elasticity G' at 23°C of 8 MPa or more as a surface layer, and further preferably includes a layer having a modulus of elasticity G' at 23°C of 20 MPa or more as a surface layer. When the modulus of elasticity G' at 23°C of the layer which is a surface layer is the aforementioned lower limit or more, it is possible to suppress the change in partial wedge angle more effectively at the time of preparation of laminated glass, and suppress double images in laminated glass more effectively. The modulus of elasticity G' at 23°C of the layer having a modulus of elasticity G' at 23°C of the aforementioned lower limit or more may be 55 Pa or less.

From the viewpoint of suppressing the change in partial wedge angle more effectively at the time of preparation of laminated glass, and suppressing double images in laminated glass more effectively, the interlayer film according to the present invention is preferably the following interlayer film (1), more preferably the following interlayer film (2), and further preferably the following interlayer film (3). An interlayer film (1) in which the interlayer film and the second glass plate are in contact with each other at separated two or more points in a region from the position of the one end of the interlayer film to the middle position between the one end and the other end, after the third step and before the fourth step in obtaining an interlayer film finally pressure-bonded thorough the first, second, third, fourth and fifth steps in this order. An interlayer film (2) in which the interlayer film and the second glass plate are in contact with each other at separated three or more points in a region from the position of the one end of the interlayer film to the middle position between the one end and the other end, after the third step and before the fourth step in obtaining an interlayer film finally pressure-bonded thorough the first, second, third, fourth and fifth steps in this order. An interlayer film (3) in which the interlayer film and the second glass plate are in contact with each other at separated four or more points in a region from the position of the one end of the interlayer film to the middle position between the one end and the other end, after the third step and before the fourth step in obtaining an interlayer film finally pressure-bonded thorough the first, second, third, fourth and fifth steps in this order. After the interlayer film before pressure-bonding and the second glass plate have come into contact with each other at separated two or more points, the interlayer film before pressure-bonding and the second glass plate may entirely come into surface contact with each other before completion of pressure-bonding.

When the interlayer film before pressure-bonding and the second glass plate come into contact with each other at separated plural points, the separated distance (the distance in which the interlayer film before pressure-bonding and the second glass plate are not in contact with each other) may be 1 μm or more, 1 mm or more, 10 mm or more, 1 cm or more, or 10 cm or more. In an interlayer film having an embossed surface, the separated distance is not generally 1 mm or more, and is not particularly 10 mm or more. The distance in which the interlayer film before pressure-bonding and the second glass plate are not in contact with each other is a distance per one non-contacting position.

After the third step and before the fourth step in obtaining the interlayer film finally pressure-bonded through the first, second, third, fourth and fifth steps in this order, the interlayer film before pressure-bonding and the second glass plate can come into contact with each other at two or more separated points in the region from the position of the one end of the interlayer film before pressure-bonding, to the middle position between the one end and the other end. In this case, the position at which the interlayer film before pressure-bonding and the second glass plate come into first contact with each other may be one point. It is only required that the interlayer film before pressure-bonding and the

second glass plate come into contact with each other at separated two or more points during progression of pressure-bonding and before completion of the pressure-bonding.

From the viewpoint of suppressing the change in partial wedge angle more effectively at the time of preparation of laminated glass, and suppressing double images in laminated glass more effectively, it is preferred that the interlayer film according to the present invention be the following interlayer film (2). An interlayer film (2) in which the interlayer film and the second glass plate are in contact with each other at separated three or more points in a region from the position of the one end of the interlayer film to the position of the other end, after the third step and before the fourth step in obtaining an interlayer film finally pressure-bonded thorough the first, second, third, fourth and fifth steps in this order. After the interlayer film before pressure-bonding and the second glass plate have come into contact with each other at separated three or more points, the interlayer film before pressure-bonding and the second glass plate may entirely come into surface contact with each other before completion of pressure-bonding.

From the viewpoint of suppressing the change in partial wedge angle more effectively at the time of preparation of laminated glass, and suppressing double images in laminated glass more effectively, the interlayer film according to the present invention is preferably the following interlayer film (4), more preferably the following interlayer film (5), and further preferably the following interlayer film (6). An interlayer film (4) in which the interlayer film before pressure-bonding and the second glass plate come into a noncontact state at separated four or more points in a region from the middle position between the one end and the other end of the interlayer film before pressure-bonding to the position of the other end, after the third step and before the fourth step in obtaining an interlayer film finally pressure-bonded thorough the first, second, third, fourth and fifth steps in this order. An interlayer film (5) in which the interlayer film before pressure-bonding and the second glass plate come into a noncontact state at separated three or more points in a region from the middle position between the one end and the other end of the interlayer film before pressure-bonding to the position of the other end, after the third step and before the fourth step in obtaining an interlayer film finally pressure-bonded thorough the first, second, third, fourth and fifth steps in this order. An interlayer film (6) in which the interlayer film before pressure-bonding and the second glass plate come into a noncontact state at separated two or more points in a region from the middle position between the one end and the other end of the interlayer film before pressure-bonding to the position of the other end, after the third step and before the fourth step in obtaining an interlayer film finally pressure-bonded thorough the first, second, third, fourth and fifth steps in this order.

The interlayer film according to the present invention may have a shading region. The shading region may be separate from the region for display. The shading region is provided so as to prevent a driver from feeling glare while driving, for example, by sunlight or outdoor lighting. The shading region can be provided so as to impart the heat blocking property. It is preferred that the shading region be located in an edge portion of the interlayer film. It is preferred that the shading region be belt-shaped.

In the shading region, a coloring agent or a filler may be used so as to change the color and the visible light transmittance. The coloring agent or the filler may be contained in a partial region in the thickness direction of the interlayer film or may be contained in the entire region in the thickness direction of the interlayer film.

The interlayer film according to the present invention has, for example, a region for display corresponding to a display region of a head-up display. The region for display is a region capable of favorably displaying information.

From the viewpoint of providing better display, and further broadening the field of view, the visible light transmittance of the region for display is preferably 80% or more, more preferably 88% or more, further preferably 90% or more. It is preferred that the visible light transmittance of the region for display be higher than the visible light transmittance of the shading region. The visible light transmittance of the region for display may be lower than the visible light transmittance of the shading region. The visible light transmittance of the region for display is higher than the visible light transmittance of the shading region preferably by 50% or more, more preferably by 60% or more.

When the visible light transmittance varies in the interlayer film of each of the region for display and the shading region, the visible light transmittance is measured at the center position of the region for display and at the center position of the shading region.

The visible light transmittance at a wavelength ranging from 380 to 780 nm of the obtained laminated glass can be measured by using a spectrophotometer ("U-4100" available from Hitachi High-Tech Science Corporation) in conformity with JIS R3211 (1998). As the glass plate, it is preferred to use clear glass having a thickness of 2 mm.

It is preferred that the region for display have a length direction and a width direction. For excellent versatility of the interlayer film, it is preferred that the width direction of the region for display be the direction connecting the one end and the other end. It is preferred that the region for display be belt-shaped.

It is preferred that the interlayer film has an MD direction and a TD direction. For example, the interlayer film is obtained by melt extrusion molding. The MD direction is a flow direction of an interlayer film at the time of producing the interlayer film. The TD direction is a direction orthogonal to the flow direction of an interlayer film at the time of producing the interlayer film and a direction orthogonal to the thickness direction of the interlayer film. It is preferred that the one end and the other end be located on either side of the TD direction.

From the viewpoint of better display, it is preferred that the interlayer film have a portion with a sectional shape

of wedge-like shape in the thickness direction. It is preferred that the sectional shape in the thickness direction of the region for display be a wedge-like shape.

Hereinafter, specific embodiments of the present invention will be described with reference to the drawings.

Figs. 1(a) and (b) are a sectional view and a front view, respectively, schematically showing an interlayer film for laminated glass in accordance with a first embodiment of the present invention. Fig. 1(a) is a sectional view along the line I-I in Fig. 1(b). The size and dimension of the interlayer film in Fig. 1 and later described drawings are appropriately changed from the actual size and shape for convenience of illustration.

In Fig. 1(a), a section in the thickness direction of an interlayer film 11 is shown. In this connection, in Fig. 1(a) and later described drawings, for convenience of illustration, the thicknesses of an interlayer film and respective layers constituting the interlayer film and the wedge angle (θ) are shown so as to be different from actual thicknesses thereof and an actual wedge angle.

The interlayer film 11 is provided with a first layer 1 (intermediate layer), a second layer 2 (surface layer), and a third layer 3 (surface layer). The second layer 2 is arranged on a first surface side of the first layer 1 to be layered thereon. The third layer 3 is arranged on a second surface side opposite to the first surface of the first layer 1 to be layered thereon. The first layer 1 is arranged between the second layer 2 and the third layer 3 to be sandwiched therebetween. The interlayer film 11 is used for obtaining laminated glass. The interlayer film 11 is an interlayer film for laminated glass. The interlayer film 11 is a multilayer interlayer film.

The interlayer film 11 has one end 11a and the other end 11b at the opposite side of the one end 11a. The one end 11a and the other end 11b are end parts of both sides facing each other. The sectional shape in the thickness direction of each of the second layer 2 and the third layer 3 is a wedge-like shape. The sectional shape in the thickness direction of the first layer 1 is a rectangular shape. The thicknesses of the second layer 2 and the third layer 3 are larger in the other end 11b side than in the one end 11a side. Accordingly, the thickness of the other end 11b of the interlayer film 11 is larger than the thickness of the one end 11a thereof. Accordingly, the interlayer film 11 has a region being thin in thickness and a region being thick in thickness.

The interlayer film 11 has a region where the thickness increases from the one end 11a side to the other end 11b side. In the interlayer film 11, the increment of the thickness varies from the one end 11a side to the other end 11b side in the region where the thickness increases. The inclination of the other surface of the interlayer film 11 relative to the one surface of the interlayer film 11 is not uniform throughout the interlayer film 11. While the interlayer film 11 actually has recesses and projections on the surface, the recesses and the projections are omitted in Fig. 1 because they are relatively small.

The interlayer film 11 has a region for display R1 corresponding to a display region of a head-up display. The interlayer film 11 has a surrounding region R2 neighboring the region for display R1.

The interlayer film 11 has a shading region R3 that is separate from the region for display R1. The shading region R3 is located in an edge portion of the interlayer film 11.

The interlayer film has a shape as shown in Fig. 1(a), and may have a one-layer structure, a two-layer structure or four or more-layer structure.

Fig. 4 is a perspective view schematically showing a roll body prepared by winding the interlayer film for laminated glass shown in Fig. 1.

An interlayer film 11 may be wound to be formed into a roll body 51 of the interlayer film 11.

The roll body 51 shown in Fig. 4 is provided with a winding core 61 and the interlayer film 11. The interlayer film 11 is wound around an outer periphery of the winding core 61.

Figs. 2(a) and (b) are a sectional view and a front view, respectively, schematically showing an interlayer film for laminated glass in accordance with a second embodiment of the present invention. Fig. 2(a) is a sectional view along the line I-I in Fig. 2(b). In Fig. 2(a), a section in the thickness direction of an interlayer film 11A is shown.

The interlayer film 11A shown in Fig. 2 is provided with a first layer 1A. The interlayer film 11A has a one-layer structure composed only of the first layer 1A and is a single-layered interlayer film. The interlayer film 11A is singly constituted by the first layer 1A. The interlayer film 11A is used for obtaining laminated glass. The interlayer film 11A is an interlayer film for laminated glass.

The interlayer film 11A has one end 11a and the other end 11b at the opposite side of the one end 11a. The one end 11a and the other end 11b are end parts of both sides facing each other. The thickness of the other end 11b of the interlayer film 11A is larger than the thickness of the one end 11a thereof. Accordingly, the first layer 1A and the interlayer film 11A have a region being thin in thickness and a region being thick in thickness.

The interlayer film 11A has a region where the thickness increases from the one end 11a side to the other end 11b side. In the interlayer film 11A, the increment of the thickness varies from the one end 11a side to the other end 11b side in the region where the thickness increases. In the interlayer film 11A, the increment of the thickness varies from the one end 11a side to the other end 11b side in the region where the thickness increases. The inclination of the other surface of the interlayer film 11A relative to the one surface of the interlayer film 11A is not uniform throughout the interlayer film 11A. While the interlayer film 11A actually has recesses and projections on the surface, the recesses and

the projections are omitted in Fig. 2 because they are relatively small.

The interlayer film 11A and the first layer 1A have portions 11Aa, 1Aa having a rectangular sectional shape in the thickness direction, and portions 11Ab, 1Ab having a wedge-like sectional shape in the thickness direction.

The interlayer film 11A has a region for display R1 corresponding to a display region of a head-up display. The interlayer film 11A has a surrounding region R2 neighboring the region for display R1.

The interlayer film 11A has a shading region R3 that is separate from the region for display R1. The shading region R3 is located in an edge portion of the interlayer film 11A.

The interlayer film has a shape as shown in Fig. 2(a) and may have a two or more layer structure.

It is preferred that the interlayer film have a portion with a sectional shape in the thickness direction of a wedge-like shape. It is preferred that the interlayer film have a portion where the thickness gradually increases from one end toward the other end. It is preferred that the sectional shape in the thickness direction of the interlayer film be a wedge-like shape. Examples of the sectional shape in the thickness direction of the interlayer film include a trapezoidal shape, a triangular shape, a pentagonal shape, and the like.

From the viewpoint of further suppressing double images, it is preferred that the interlayer film have a part where the increment of the thickness increases from the one end side to the other end side in the region where the thickness increases. From the viewpoint of further suppressing double images, it is preferred that the interlayer film have a part where the wedge angle increases from the one end side to the other end side in the region where the sectional shape in the thickness direction is a wedge shape.

In order to suppress double images, the wedge angle ($\theta$) of the interlayer film can be appropriately set according to the fitting angle of laminated glass. The wedge angle ($\theta$) is a wedge angle in the entire interlayer film. From the viewpoint of further suppressing double images, the wedge angle ($\theta$) of the interlayer film is preferably 0.1 mrad (0.00575 degrees) or more, and more preferably 0.2 mrad (0.0115 degrees) or more. When the wedge angle $\theta$ is the above lower limit or more, it is possible to obtain laminated glass suited for cars such as a truck or a bus in which the attachment angle of the windshield is large.

From the viewpoint of further suppressing double images, the wedge angle $\theta$ of the interlayer film is preferably 2 mrad (0.1146 degrees) or less, and more preferably 0.7 mrad (0.0401 degrees) or less. When the wedge angle $\theta$ is the above upper limit or less, it is possible to obtain laminated glass suited for cars such as a sports car in which the attachment angle of the windshield is small.

The wedge angle ($\theta$) of the interlayer film is an interior angle formed at the intersection point between a straight line connecting surface parts on the one side of the interlayer film (first surface part) of the maximum thickness part and the minimum thickness part in the interlayer film, and a straight line connecting surface parts of the other side of the interlayer film (second surface part) of the maximum thickness part and the minimum thickness part in the interlayer film.

When there are a plurality of maximum thicknesses parts, there are a plurality of minimum thicknesses parts, the maximum thickness part is located in a certain region, or the minimum thickness part is located in a certain region, the maximum thickness part and the minimum thickness part for determining the wedge angle $\theta$ are selected so that the wedge angle $\theta$ to be determined is the maximum.

The thickness of the interlayer film is not particularly limited. The thickness of the interlayer film refers to the total thickness of the respective layers constituting the interlayer film. Thus, in the case of a multi-layered interlayer film 11, the thickness of the interlayer film refers to the total thickness of the first layer 1, the second layer 2, and the third layer 3.

The maximum thickness of the interlayer film is preferably 0.1 mm or more, more preferably 0.25 mm or more, further preferably 0.5 mm or more, especially preferably 0.8 mm or more and is preferably 3 mm or less, more preferably 2 mm or less, further preferably 1.5 mm or less.

A distance between the one end and the other end is defined as X. It is preferred that the interlayer film have a minimum thickness in the region at a distance of 0X to 0.2X inwardly from the one end, and a maximum thickness in the region at a distance of 0X to 0.2X inwardly from the other end. It is more preferred that the interlayer film have a minimum thickness in the region at a distance of 0X to 0.1X inwardly from the one end, and a maximum thickness in the region at a distance of 0X to 0.1X inwardly from the other end. It is preferred that the interlayer film have a minimum thickness at the one end and the interlayer film have a maximum thickness at the other end.

The interlayer film 11, 11A has a maximum thickness at the other end 11b and a minimum thickness at the one end 11a.

The interlayer film may have a uniform-thickness part. The uniform-thickness part means that the variation in thickness does not exceed 10 $\mu$m per a distance range of 10 cm in the direction connecting the one end and the other end of the interlayer film. Therefore, the uniform-thickness part refers to the part where the variation in thickness does not exceed 10 $\mu$m per a distance range of 10 cm in the direction connecting the one end and the other end of the interlayer film. To be more specific, the uniform-thickness part refers to the part where the thickness does not vary at all in the direction connecting the one end and the other end of the interlayer film, or the thickness varies by 10 $\mu$m or less per a distance range of 10 cm in the direction connecting the one end and the other end of the interlayer film.

From the viewpoint of the practical aspect and the viewpoint of sufficiently enhancing the adhesive force and

the penetration resistance, the maximum thickness of a surface layer is preferably 0.001 mm or more, more preferably 0.2 mm or more, further preferably 0.3 mm or more, and is preferably 1 mm or less, and more preferably 0.8 mm or less.

From the viewpoint of the practical aspect and the viewpoint of sufficiently enhancing the penetration resistance, the maximum thickness of a layer (intermediate layer) arranged between two surface layers is preferably 0.001 mm or more, more preferably 0.1 mm or more, and further preferably 0.2 mm or more and is preferably 0.8 mm or less, more preferably 0.6 mm or less, and further preferably 0.3 mm or less.

The distance X between one end and the other end of the interlayer film is preferably 3 m or less, more preferably 2 m or less, especially preferably 1.5 m or less, and is preferably 0.5 m or more, more preferably 0.8 m or more, especially preferably 1 m or more.

Hereinafter, the details of materials constituting the respective layers of a multi-layered interlayer film and the single-layered interlayer film will be described.

(Resin)

It is preferred that the interlayer film contain a resin. One kind of the resin may be used alone, and two or more kinds thereof may be used in combination.

Examples of the resin include thermosetting resins and thermoplastic resins.

It is preferred that the interlayer film contain a resin (hereinafter, sometimes described as a resin (0)). It is preferred that the interlayer film contain a thermoplastic resin (hereinafter, sometimes described as a thermoplastic resin (0)). It is preferred that the interlayer film contain a polyvinyl acetal resin (hereinafter, sometimes described as a polyvinyl acetal resin (0)) as the thermoplastic resin (0). It is preferred that the first layer contain a resin (hereinafter, sometimes described as a resin (1)). It is preferred that the first layer contain a thermoplastic resin (hereinafter, sometimes described as a thermoplastic resin (1)). It is preferred that the first layer contain a polyvinyl acetal resin (hereinafter, sometimes described as a polyvinyl acetal resin (1)) as the thermoplastic resin (1). It is preferred that the second layer contain a resin (hereinafter, sometimes described as a resin (2)). It is preferred that the second layer contain a thermoplastic resin (hereinafter, sometimes described as a thermoplastic resin (2)). It is preferred that the second layer contain a polyvinyl acetal resin (hereinafter, sometimes described as a polyvinyl acetal resin (2)) as the thermoplastic resin (2). It is preferred that the third layer contain a resin (hereinafter, sometimes described as a resin (3)). It is preferred that the third layer contain a thermoplastic resin (hereinafter, sometimes described as a thermoplastic resin (3)). It is preferred that the third layer contain a polyvinyl acetal resin (hereinafter, sometimes described as a polyvinyl acetal resin (3)) as the thermoplastic resin (3). The resin (1), the resin (2), and the resin (3) may be the same as or different from one another. For still higher sound insulating properties, it is preferred that the resin (1) be different from the resin (2) and the resin (3). The thermoplastic resin (1), the thermoplastic resin (2), and the thermoplastic resin (3) may be the same or different from one another. For still higher sound insulating properties, it is preferred that the thermoplastic resin (1) be different from the thermoplastic resin (2) and the thermoplastic resin (3). Each of the polyvinyl acetal resin (1), the polyvinyl acetal resin (2) and the polyvinyl acetal resin (3) may be the same or different from one another. For still higher sound insulating properties, it is preferred that the polyvinyl acetal resin (1) be different from the polyvinyl acetal resin (2) and the polyvinyl acetal resin (3). One kind of each of the thermoplastic resin (0), the thermoplastic resin (1), the thermoplastic resin (2), and the thermoplastic resin (3) may be used alone and two or more kinds thereof may be used in combination. One kind of each of the polyvinyl acetal resin (0), the polyvinyl acetal resin (1), the polyvinyl acetal resin (2), and the polyvinyl acetal resin (3) may be used alone and two or more kinds thereof may be used in combination.

Examples of the thermoplastic resin include a polyvinyl acetal resin, a polyester resin, an ethylene-vinyl acetate copolymer resin, an ethylene-acrylic acid copolymer resin, a polyurethane resin, a polyvinyl alcohol resin, and the like. Thermoplastic resins other than these may be used. The polyoxymethylene (or polyacetal) resin is included in the polyvinyl acetal resin.

It is preferred that the resin be a thermoplastic resin. The thermoplastic resin is more preferably a polyvinyl acetal resin or a polyester resin, and is further preferably a polyvinyl acetal resin. By using a polyvinyl acetal resin and a plasticizer together, the adhesive force of the interlayer film according to the present invention to a lamination glass member or another interlayer film is further enhanced. It is preferred that the polyvinyl acetal resin be a polyvinyl butyral resin.

For example, the polyvinyl acetal resin can be produced by acetalizing polyvinyl alcohol (PVA) with an aldehyde. It is preferred that the polyvinyl acetal resin be an acetalized product of polyvinyl alcohol. For example, the polyvinyl alcohol can be obtained by saponifying polyvinyl acetate. The saponification degree of the polyvinyl alcohol generally lies within the range of 70 to 99.9% by mole.

The average polymerization degree of the polyvinyl alcohol (PVA) is preferably 200 or more, more preferably 500 or more, even more preferably 1500 or more, further preferably 1600 or more, especially preferably 2600 or more, most preferably 2700 or more and is preferably 5000 or less, more preferably 4000 or less, further preferably 3500 or less. When the average polymerization degree is the above lower limit or more, the penetration resistance of laminated

glass is further enhanced. When the average polymerization degree is the above upper limit or less, formation of an interlayer film is facilitated.

The average polymerization degree of the polyvinyl alcohol is determined by a method in accordance with JIS K6726 "Testing methods for polyvinyl alcohol".

The number of carbon atoms of the acetal group contained in the polyvinyl acetal resin is not particularly limited. The aldehyde used at the time of producing the polyvinyl acetal resin is not particularly limited. It is preferred that the number of carbon atoms of the acetal group in the polyvinyl acetal resin fall within the range of 3 to 5 and it is more preferred that the number of carbon atoms of the acetal group be 3 or 4. When the number of carbon atoms of the acetal group in the polyvinyl acetal resin is 3 or more, the glass transition temperature of the interlayer film is sufficiently lowered. The number of carbon atoms of the acetal group in the polyvinyl acetal resin may be 4 or 5.

The aldehyde is not particularly limited. In general, an aldehyde with 1 to 10 carbon atoms is preferably used. Examples of the aldehyde with 1 to 10 carbon atoms include formaldehyde, acetaldehyde, propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, benzaldehyde, and the like. Propionaldehyde, n-butyraldehyde, isobutyraldehyde, n-hexylaldehyde, or n-valeraldehyde is preferred, propionaldehyde, n-butyraldehyde, or isobutyraldehyde is more preferred, and n-butyraldehyde is further preferred. One kind of the aldehyde may be used alone, and two or more kinds thereof may be used in combination.

The content of the hydroxyl group (the amount of hydroxyl groups) of the polyvinyl acetal resin (0) is preferably 15% by mole or more and more preferably 18% by mole or more and is preferably 40% by mole or less and more preferably 35% by mole or less. When the content of the hydroxyl group is the above lower limit or more, the adhesive force of the interlayer film is further enhanced. Moreover, when the content of the hydroxyl group is the above upper limit or less, the flexibility of the interlayer film is enhanced and the handling of the interlayer film is facilitated.

The content of the hydroxyl group (hydroxyl group amount) of the polyvinyl acetal resin (1) is preferably 17% by mole or more, more preferably 20% by mole or more, and further preferably 22% by mole or more. The content of the hydroxyl group (the amount of hydroxyl groups) of the polyvinyl acetal resin (1) is preferably 30% by mole or less, more preferably 28% by mole or less, still more preferably 27% by mole or less, further preferably 25% by mole or less, especially preferably less than 25% by mole, and most preferably 24% by mole or less. When the content of the hydroxyl group is the above lower limit or more, the mechanical strength of the interlayer film is further enhanced. In particular, when the content of the hydroxyl group of the polyvinyl acetal resin (1) is 20% by mole or more, the resin is high in reaction efficiency and is excellent in productivity, when being 28% by mole or less, the sound insulating properties of laminated glass are further enhanced, and when being 28% by mole or less, the sound insulating properties are further enhanced. Moreover, when the content of the hydroxyl group is the above upper limit or less, the flexibility of the interlayer film is enhanced and the handling of the interlayer film is facilitated.

Each of the contents of the hydroxyl group of the polyvinyl acetal resin (2) and the polyvinyl acetal resin (3) is preferably 25% by mole or more, more preferably 28% by mole or more, more preferably 30% by mole or more, still more preferably more than 31% by mole, further preferably 31.5% by mole or more, further preferably 32% by mole or more, and especially preferably 33% by mole or more. Each of the contents of the hydroxyl group of the polyvinyl acetal resin (2) and the polyvinyl acetal resin (3) is preferably 38% by mole or less, more preferably 37% by mole or less, further preferably 36.5% by mole or less, especially preferably 36% by mole or less. When the content of the hydroxyl group is the above lower limit or more, the adhesive force of the interlayer film is further enhanced. Moreover, when the content of the hydroxyl group is the above upper limit or less, the flexibility of the interlayer film is enhanced and the handling of the interlayer film is facilitated.

From the viewpoint of further enhancing the sound insulating properties, it is preferred that the content of the hydroxyl group of the polyvinyl acetal resin (1) be lower than the content of the hydroxyl group of the polyvinyl acetal resin (2). From the viewpoint of further enhancing the sound insulating properties, it is preferred that the content of the hydroxyl group of the polyvinyl acetal resin (1) be lower than the content of the hydroxyl group of the polyvinyl acetal resin (3). From the viewpoint of still further enhancing the sound insulating properties, the absolute value of a difference between the content of the hydroxyl group of the polyvinyl acetal resin (1) and the content of the hydroxyl group of the polyvinyl acetal resin (2) is preferably 1% by mole or more, more preferably 5% by mole or more, further preferably 9% by mole or more, especially preferably 10% by mole or more, most preferably 12% by mole or more. From the viewpoint of still further enhancing the sound insulating properties, the absolute value of a difference between the content of the hydroxyl group of the polyvinyl acetal resin (1) and the content of the hydroxyl group of the polyvinyl acetal resin (3) is preferably 1% by mole or more, more preferably 5% by mole or more, further preferably 9% by mole or more, especially preferably 10% by mole or more, most preferably 12% by mole or more. An absolute value of difference between the content of the hydroxyl group of the polyvinyl acetal resin (1) and the content of the hydroxyl group of the polyvinyl acetal resin (2) is preferably 20% by mole or less. An absolute value of difference between the content of the hydroxyl group of the polyvinyl acetal resin (1) and the content of the hydroxyl group of the polyvinyl acetal resin (3) is preferably 20% by mole or less.

The content of the hydroxyl group of the polyvinyl acetal resin is a mole fraction, represented in percentage, obtained by dividing the amount of ethylene groups to which the hydroxyl group is bonded by the total amount of ethylene groups in the main chain. For example, the amount of ethylene groups to which the hydroxyl group is bonded can be determined in accordance with JIS K6728 "Testing methods for polyvinyl butyral".

The acetylation degree (the amount of acetyl groups) of the polyvinyl acetal resin (0) is preferably 0.1% by mole or more, more preferably 0.3% by mole or more, further preferably 0.5% by mole or more and is preferably 30% by mole or less, more preferably 25% by mole or less, and further preferably 20% by mole or less. When the acetylation degree is the above lower limit or more, the compatibility between the polyvinyl acetal resin and a plasticizer is enhanced. When the acetylation degree is the above upper limit or less, with regard to the interlayer film and laminated glass, the moisture resistance thereof is enhanced.

The acetylation degree (the amount of acetyl groups) of the polyvinyl acetal resin (1) is preferably 0.01% by mole or more, more preferably 0.1% by mole or more, even more preferably 7% by mole or more, further preferably 9% by mole or more and is preferably 30% by mole or less, more preferably 25% by mole or less, further preferably 24% by mole or less, especially preferably 20% by mole or less. When the acetylation degree is the above lower limit or more, the compatibility between the polyvinyl acetal resin and a plasticizer is enhanced. When the acetylation degree is the above upper limit or less, with regard to the interlayer film and laminated glass, the moisture resistance thereof is enhanced. In particular, when the acetylation degree of the polyvinyl acetal resin (1) is 0.1% by mole or more and is 25% by mole or less, the resulting laminated glass is excellent in penetration resistance.

The acetylation degree of each of the polyvinyl acetal resin (2) and the polyvinyl acetal resin (3) is preferably 0.01% by mole or more and more preferably 0.5% by mole or more and is preferably 10% by mole or less and more preferably 2% by mole or less. When the acetylation degree is the above lower limit or more, the compatibility between the polyvinyl acetal resin and a plasticizer is enhanced. When the acetylation degree is the above upper limit or less, with regard to the interlayer film and laminated glass, the moisture resistance thereof is enhanced.

The acetylation degree is a mole fraction, represented in percentage, obtained by dividing the amount of ethylene groups to which the acetyl group is bonded by the total amount of ethylene groups in the main chain. For example, the amount of ethylene groups to which the acetyl group is bonded can be determined in accordance with JIS K6728 "Testing methods for polyvinyl butyral".

The acetalization degree of the polyvinyl acetal resin (0) (the butyralization degree in the case of a polyvinyl butyral resin) is preferably 60% by mole or more and more preferably 63% by mole or more and is preferably 85% by mole or less, more preferably 75% by mole or less, further preferably 70% by mole or less. When the acetalization degree is the above lower limit or more, the compatibility between the polyvinyl acetal resin and a plasticizer is enhanced. When the acetalization degree is the above upper limit or less, the reaction time required for producing the polyvinyl acetal resin is shortened.

The acetalization degree of the polyvinyl acetal resin (1) (the butyralization degree in the case of a polyvinyl butyral resin) is preferably 47% by mole or more and more preferably 60% by mole or more and is preferably 85% by mole or less, more preferably 80% by mole or less, further preferably 75% by mole or less. When the acetalization degree is the above lower limit or more, the compatibility between the polyvinyl acetal resin and a plasticizer is enhanced. When the acetalization degree is the above upper limit or less, the reaction time required for producing the polyvinyl acetal resin is shortened.

The acetalization degree of each of the polyvinyl acetal resin (2) and the polyvinyl acetal resin (3) (the butyralization degree in the case of a polyvinyl butyral resin) is preferably 55% by mole or more and more preferably 60% by mole or more and is preferably 75% by mole or less and more preferably 71% by mole or less. When the acetalization degree is the above lower limit or more, the compatibility between the polyvinyl acetal resin and a plasticizer is enhanced. When the acetalization degree is the above upper limit or less, the reaction time required for producing the polyvinyl acetal resin is shortened.

The acetalization degree is determined in the following manner. From the total amount of the ethylene group in the main chain, the amount of the ethylene group to which the hydroxyl group is bonded and the amount of the ethylene group to which the acetyl group is bonded are subtracted. The obtained value is divided by the total amount of the ethylene group in the main chain to obtain a mole fraction. The mole fraction represented in percentage is the acetalization degree.

In this connection, it is preferred that the content of the hydroxyl group (the amount of hydroxyl groups), the acetalization degree (the butyralization degree) and the acetylation degree be calculated from the results determined by a method in accordance with JIS K6728 "Testing methods for polyvinyl butyral". In this context, a method in accordance with ASTM D1396-92 may be used. When the polyvinyl acetal resin is a polyvinyl butyral resin, the content of the hydroxyl group (the amount of hydroxyl groups), the acetalization degree (the butyralization degree) and the acetylation degree can be calculated from the results measured by a method in accordance with JIS K6728 "Testing methods for polyvinyl butyral".

(Plasticizer)

From the viewpoint of further enhancing the adhesive force of an interlayer film, it is preferred that the interlayer film according to the present invention contain a plasticizer (hereinafter, sometimes described as a plasticizer (0)). It is preferred that the first layer contain a plasticizer (hereinafter, sometimes described as a plasticizer (1)). It is preferred that the second layer contain a plasticizer (hereinafter, sometimes described as a plasticizer (2)). It is preferred that the third layer contain a plasticizer (hereinafter, sometimes described as a plasticizer (3)). When the thermoplastic resin contained in the interlayer film is a polyvinyl acetal resin, it is especially preferred that the interlayer film (the respective layers) contain a plasticizer. It is preferred that a layer containing a polyvinyl acetal resin contain a plasticizer.

The plasticizer is not particularly limited. As the plasticizer, a conventionally known plasticizer can be used. One kind of the plasticizer may be used alone, and two or more kinds thereof may be used in combination.

Examples of the plasticizer include organic ester plasticizers such as a monobasic organic acid ester and a polybasic organic acid ester, organic phosphate plasticizers such as an organic phosphate plasticizer and an organic phosphite plasticizer, and the like. Organic ester plasticizers are preferred. It is preferred that the plasticizer be a liquid plasticizer.

Examples of the monobasic organic acid ester include a glycol ester obtained by the reaction of a glycol with a monobasic organic acid, and the like. Examples of the glycol include triethylene glycol, tetraethylene glycol, tripropylene glycol, and the like. Examples of the monobasic organic acid include butyric acid, isobutyric acid, caproic acid, 2-ethylbutyric acid, heptanoic acid, n-octylic acid, 2-ethylhexanoic acid, n-nonylic acid, decylic acid, benzoic acid and the like.

Examples of the polybasic organic acid ester include an ester compound of a polybasic organic acid and an alcohol having a linear or branched structure of 4 to 8 carbon atoms. Examples of the polybasic organic acid include adipic acid, sebacic acid, azelaic acid, and the like.

Examples of the organic ester plasticizer include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, diethylene glycol dibenzoate, dipropylene glycol dibenzoate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyds, a mixture of a phosphoric acid ester and an adipic acid ester, and the like. Organic ester plasticizers other than these may be used. Other adipic acid esters other than the above-described adipic acid esters may be used.

Examples of the organic phosphate plasticizer include tributoxyethyl phosphate, isodecyl phenyl phosphate, triisopropyl phosphate, and the like.

It is preferred that the plasticizer be a diester plasticizer represented by the following formula (1).

[Chemical 1]

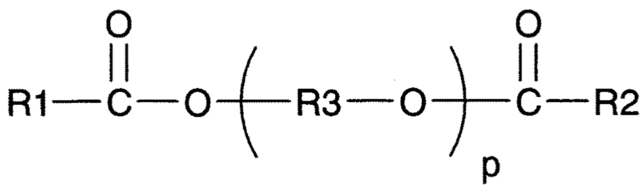

...(1)

In the foregoing formula (1), R1 and R2 each represent an organic group with 5 to 10 carbon atoms, R3 represents an ethylene group, an isopropylene group, or an n-propylene group, and p represents an integer of 3 to 10. It is preferred that R1 and R2 in the foregoing formula (1) each be an organic group with 6 to 10 carbon atoms.

It is preferred that the plasticizer include triethylene glycol di-2-ethylhexanoate (3GO), triethylene glycol di-2-ethylbutyrate (3GH) or triethylene glycol di-2-ethylpropanoate. It is more preferred that the plasticizer include triethylene glycol di-2-ethylhexanoate (3GO) or triethylene glycol di-2-ethylbutyrate (3GH), and it is further preferred that the plasticizer include triethylene glycol di-2-ethylhexanoate.

From the viewpoint of suppressing the change in partial wedge angle more effectively at the time of preparation of laminated glass, and suppressing double images in laminated glass more effectively, it is preferred that the interlayer film according to the present invention include a layer containing a thermoplastic resin, and a plasticizer in a content of

25 parts by weight or more and 45 parts by weight or less, relative to 100 parts by weight of the thermoplastic resin. In this case, the content of the plasticizer in the layer containing the thermoplastic resin and the plasticizer is more preferably 35 parts by weight or less, further preferably 32 parts by weight or less, and especially preferably 30 parts by weight or less.

In the interlayer film, a content of the plasticizer (0) relative to 100 parts by weight of the resin (0) (when the resin (0) is thermoplastic resin (0), 100 parts by weight of the thermoplastic resin (0) ; when the resin (0) is polyvinyl acetal resin (0), 100 parts by weight of the polyvinyl acetal resin (0)) is referred to as content (0). The content (0) is preferably 25 parts by weight or more, more preferably 30 parts by weight or more, and is preferably 100 parts by weight or less, more preferably 60 parts by weight or less, further preferably 50 parts by weight or less. When the content of the plasticizer (0) is the above lower limit or more, the penetration resistance of laminated glass is further enhanced. When the content of the plasticizer (0) is the above upper limit or less, the transparency of the interlayer film is further enhanced. Further, when the content of the plasticizer (0) is the aforementioned lower limit or more and the aforementioned upper limit or less, it is possible to suppress the change in partial wedge angle more effectively at the time of preparation of laminated glass, and suppress double images in laminated glass more effectively.

In the first layer, a content of the plasticizer (1) relative to 100 parts by weight of the resin (1) (when the resin (1) is thermoplastic resin (1), 100 parts by weight of the thermoplastic resin (1); when the resin (1) is polyvinyl acetal resin (1), 100 parts by weight of the polyvinyl acetal resin (1)) is referred to as content (1). The content (1) is preferably 50 parts by weight or more, more preferably 55 parts by weight or more, further preferably 60 parts by weight or more, and is preferably 100 parts by weight or less, more preferably 90 parts by weight or less, further preferably 85 parts by weight or less, especially preferably 80 parts by weight or less. When the content (1) is the above lower limit or more, the flexibility of the interlayer film is enhanced and the handling of the interlayer film is facilitated. When the content (1) is the above upper limit or less, the penetration resistance of laminated glass is further enhanced.

In the second layer, a content of the plasticizer (2) relative to 100 parts by weight of the resin (2) (when the resin (2) is thermoplastic resin (2), 100 parts by weight of the thermoplastic resin (2) ; when the resin (2) is polyvinyl acetal resin (2), 100 parts by weight of the polyvinyl acetal resin (2)) is referred to as content (2). In the third layer, a content of the plasticizer (3) relative to 100 parts by weight of the resin (3) (when the resin (3) is thermoplastic resin (3), 100 parts by weight of the thermoplastic resin (3) ; when the resin (3) is polyvinyl acetal resin (3), 100 parts by weight of the polyvinyl acetal resin (3)) is referred to as content (3). Each of the content (2) and the content (3) is preferably 10 parts by weight or more, more preferably 15 parts by weight or more, further preferably 20 parts by weight or more, especially preferably 24 parts by weight or more, and most preferably 25 parts by weight or more. Each of the content (2) and the content (3) is preferably 45 parts by weight or less, more preferably 40 parts by weight or less, further preferably 35 parts by weight or less, especially preferably 32 parts by weight or less, and most preferably 30 parts by weight or less. When the content (2) and the content (3) are the above lower limit or more, the flexibility of the interlayer film is enhanced and the handling of the interlayer film is facilitated. When the content (2) and the content (3) are the above upper limit or less, the penetration resistance of laminated glass is further enhanced.

For the purpose of enhancing the sound insulating properties of laminated glass, it is preferred that the content (1) be larger than the content (2) and it is preferred that the content (1) be larger than the content (3).

From the viewpoint of further enhancing the sound insulating property of laminated glass, each of the absolute value of difference between the content (2) and the content (1) and the absolute value of difference between the content (3) and the content (1) is preferably 10 parts by weight or more, more preferably 15 parts by weight or more, and further preferably 20 parts by weight or more. Each of the absolute value of difference between the content (2) and the content (1) and the absolute value of difference between the content (3) and the content (1) is preferably 80 parts by weight or less, more preferably 75 parts by weight or less, further preferably 70 parts by weight or less.

(Heat shielding substance)

It is preferred that the interlayer film contain a heat shielding substance. It is preferred that the first layer contain a heat shielding substance. It is preferred that the second layer contain a heat shielding substance. It is preferred that the third layer contain a heat shielding substance. One kind of the heat shielding substance may be used alone, and two or more kinds thereof may be used in combination.

It is preferred that the heat shielding substance contain at least one kind of Ingredient X among a phthalocyanine compound, a naphthalocyanine compound, and an anthracyanine compound or contain heat shielding particles. In this case, the heat shielding compound may be constituted of both of the Ingredient X and the heat shielding particles.

Ingredient X:

It is preferred that the interlayer film include at least one kind of Ingredient X among a phthalocyanine compound, a naphthalocyanine compound, and an anthracyanine compound. It is preferred that the first layer contain the Ingredient X. It is preferred that the second layer contain the Ingredient X. It is preferred that the third layer contain the Ingredient

X. The Ingredient X is a heat shielding substance. One kind of the Ingredient X may be used alone, and two or more kinds thereof may be used in combination.

The Ingredient X is not particularly limited. As the Ingredient X, conventionally known phthalocyanine compound, naphthalocyanine compound and anthracyanine compound can be used.

Examples of the Ingredient X include phthalocyanine, a derivative of phthalocyanine, naphthalocyanine, a derivative of naphthalocyanine, anthracyanine, and a derivative of anthracyanine, and the like. It is preferred that each of the phthalocyanine compound and the derivative of phthalocyanine have a phthalocyanine skeleton. It is preferred that each of the naphthalocyanine compound and the derivative of naphthalocyanine have a naphthalocyanine skeleton. It is preferred that each of the anthracyanine compound and the derivative of anthracyanine have an anthracyanine skeleton.

With regard to the interlayer film and laminated glass, from the viewpoint of further enhancing the heat shielding properties thereof, it is preferred that the Ingredient X be at least one kind selected from the group consisting of phthalocyanine, a derivative of phthalocyanine, naphthalocyanine and a derivative of naphthalocyanine, and it is more preferred that the Ingredient X be at least one kind among phthalocyanine and a derivative of phthalocyanine.

From the viewpoints of effectively enhancing the heat shielding properties and maintaining the visible light transmittance at a higher level over a long period of time, it is preferred that the Ingredient X contain vanadium atoms or copper atoms. It is preferred that the Ingredient X contain vanadium atoms and it is also preferred that the Ingredient X contain copper atoms. It is more preferred that the Ingredient X be at least one kind among phthalocyanine containing vanadium atoms or copper atoms and a derivative of phthalocyanine containing vanadium atoms or copper atoms. With regard to the interlayer film and laminated glass, from the viewpoint of still further enhancing the heat shielding properties thereof, it is preferred that the Ingredient X have a structural unit in which an oxygen atom is bonded to a vanadium atom.

In 100% by weight of the interlayer film or in 100% by weight of a layer containing the Ingredient X (a first layer, a second layer, or a third layer), the content of the Ingredient X is preferably 0.001% by weight or more, more preferably 0.005% by weight or more, further preferably 0.01% by weight or more, especially preferably 0.02% by weight or more. In 100% by weight of the interlayer film or in 100% by weight of a layer containing the Ingredient X (a first layer, a second layer, or a third layer), the content of the Ingredient X is preferably 0.2% by weight or less, more preferably 0.1% by weight or less, further preferably 0.05% by weight or less, especially preferably 0.04% by weight or less. When the content of the Ingredient X is the above lower limit or more and the above upper limit or less, the heat shielding properties are sufficiently enhanced and the visible light transmittance is sufficiently enhanced. For example, it is possible to make the visible light transmittance 70% or more.

Heat shielding particles:

It is preferred that the interlayer film contain heat shielding particles. It is preferred that the first layer contain the heat shielding particles. It is preferred that the second layer contain the heat shielding particles. It is preferred that the third layer contain the heat shielding particles. The heat shielding particle is of a heat shielding substance. By the use of heat shielding particles, infrared rays (heat rays) can be effectively cut off. One kind of the heat shielding particles may be used alone, and two or more kinds thereof may be used in combination.

From the viewpoint of further enhancing the heat shielding properties of laminated glass, it is more preferred that the heat shielding particles be metal oxide particles. It is preferred that the heat shielding particle be a particle (a metal oxide particle) formed from an oxide of a metal.

The energy amount of an infrared ray with a wavelength of 780 nm or longer which is longer than that of visible light is small as compared with an ultraviolet ray. However, the thermal action of infrared rays is large, and when infrared rays are absorbed into a substance, heat is released from the substance. Accordingly, infrared rays are generally called heat rays. By the use of the heat shielding particles, infrared rays (heat rays) can be effectively cut off. In this connection, the heat shielding particle means a particle capable of absorbing infrared rays.

Specific examples of the heat shielding particles include metal oxide particles such as aluminum-doped tin oxide particles, indium-doped tin oxide particles, antimony-doped tin oxide particles (ATO particles), gallium-doped zinc oxide particles (GZO particles), indium-doped zinc oxide particles (IZO particles), aluminum-doped zinc oxide particles (AZO particles), niobium-doped titanium oxide particles, sodium-doped tungsten oxide particles, cesium-doped tungsten oxide particles, thallium-doped tungsten oxide particles, rubidium-doped tungsten oxide particles, tin-doped indium oxide particles (ITO particles), tin-doped zinc oxide particles and silicon-doped zinc oxide particles, lanthanum hexaboride ($LaB_6$) particles, and the like. Heat shielding particles other than these may be used. Since the heat ray shielding function is high, preferred are metal oxide particles, more preferred are ATO particles, GZO particles, IZO particles, ITO particles or tungsten oxide particles, and especially preferred are ITO particles or tungsten oxide particles. In particular, since the heat ray shielding function is high and the particles are readily available, preferred are tin-doped indium oxide particles (ITO particles), and also preferred are tungsten oxide particles.

With regard to the interlayer film and laminated glass, from the viewpoint of further enhancing the heat shielding

properties thereof, it is preferred that the tungsten oxide particles be metal-doped tungsten oxide particles. Examples of the "tungsten oxide particles" include metal-doped tungsten oxide particles. Specifically, examples of the metal-doped tungsten oxide particles include sodium-doped tungsten oxide particles, cesium-doped tungsten oxide particles, thallium-doped tungsten oxide particles, rubidium-doped tungsten oxide particles, and the like.

With regard to the interlayer film and laminated glass, from the viewpoint of further enhancing the heat shielding properties thereof, cesium-doped tungsten oxide particles are especially preferred. With regard to the interlayer film and laminated glass, from the viewpoint of still further enhancing the heat shielding properties thereof, it is preferred that the cesium-doped tungsten oxide particles be tungsten oxide particles represented by the formula: $Cs_{0.33}WO_3$.

The average particle diameter of the heat shielding particles is preferably 0.01 μm or more, more preferably 0.02 μm or more, and is preferably 0.1 μm or less and more preferably 0.05 μm or less. When the average particle diameter is the above lower limit or more, the heat ray shielding properties are sufficiently enhanced. When the average particle diameter is the above upper limit or less, the dispersibility of heat shielding particles is enhanced.

The "average particle diameter" refers to the volume average particle diameter. The average particle diameter can be measured using a particle size distribution measuring apparatus ("UPA-EX150" available from NIKKISO CO., LTD.), or the like.

In 100% by weight of the interlayer film or in 100% by weight of a layer containing the heat shielding particles (a first layer, a second layer, or a third layer), each content of the heat shielding particles (in particular, the content of tungsten oxide particles) is preferably 0.01% by weight or more, more preferably 0.1% by weight or more, further preferably 1% by weight or more, especially preferably 1.5% by weight or more. In 100% by weight of the interlayer film or in 100% by weight of a layer containing the heat shielding particles (a first layer, a second layer, or a third layer), each content of the heat shielding particles (in particular, the content of tungsten oxide particles) is preferably 6% by weight or less, more preferably 5.5% by weight or less, further preferably 4% by weight or less, especially preferably 3.5% by weight or less, most preferably 3% by weight or less. When the content of the heat shielding particles is the above lower limit or more and the above upper limit or less, the heat shielding properties are sufficiently enhanced and the visible light transmittance is sufficiently enhanced.

(Metal salt)

It is preferred that the interlayer film contain at least one kind of metal salt (hereinafter, sometimes described as Metal salt M) among an alkali metal salt, an alkaline earth metal salt, and a magnesium salt. It is preferred that the first layer contain the Metal salt M. It is preferred that the second layer contain the Metal salt M. It is preferred that the third layer contain the Metal salt M. By the use of the Metal salt M, controlling the adhesivity between the interlayer film and a lamination glass member such as a glass plate or the adhesivity between respective layers in the interlayer film is facilitated. One kind of the Metal salt M may be used alone, and two or more kinds thereof may be used in combination.

It is preferred that the Metal salt M contain at least one kind of metal selected from the group consisting of Li, Na, K, Rb, Cs, Mg, Ca, Sr and Ba. It is preferred that the metal salt included in the interlayer film contain at least one kind of metal among K and Mg.

Moreover, it is more preferred that the Metal salt M be an alkali metal salt of an organic acid with 2 to 16 carbon atoms, an alkaline earth metal salt of an organic acid with 2 to 16 carbon atoms, and a magnesium salt of an organic acid with 2 to 16 carbon atoms, and it is further preferred that the Metal salt M be a magnesium carboxylate with 2 to 16 carbon atoms or a potassium carboxylate with 2 to 16 carbon atoms.

Examples of the magnesium carboxylate with 2 to 16 carbon atoms and the potassium carboxylate with 2 to 16 carbon atoms include magnesium acetate, potassium acetate, magnesium propionate, potassium propionate, magnesium 2-ethylbutyrate, potassium 2-ethylbutanoate, magnesium 2-ethylhexanoate, potassium 2-ethylhexanoate, and the like.

The total of the contents of Mg and K in an interlayer film containing the Metal salt M or a layer containing the Metal salt M (a first layer, a second layer, or a third layer) is preferably 5 ppm or more, more preferably 10 ppm or more, and further preferably 20 ppm or more and is preferably 300 ppm or less, more preferably 250 ppm or less, and further preferably 200 ppm or less. When the total of the contents of Mg and K is the above lower limit or more and the above upper limit or less, the adhesivity between the interlayer film and a glass plate or the adhesivity between respective layers in the interlayer film can be further well controlled.

(Ultraviolet ray screening agent)

It is preferred that the interlayer film contain an ultraviolet ray screening agent. It is preferred that the first layer contain an ultraviolet ray screening agent. It is preferred that the second layer contain an ultraviolet ray screening agent. It is preferred that the third layer contain an ultraviolet ray screening agent. By the use of an ultraviolet ray screening agent, even when the interlayer film and the laminated glass are used for a long period of time, the visible light transmittance becomes further hard to be lowered. One kind of the ultraviolet ray screening agent may be used alone, and two or more kinds thereof may be used in combination.

Examples of the ultraviolet ray screening agent include an ultraviolet ray absorber. It is preferred that the ultraviolet ray screening agent be an ultraviolet ray absorber.

Examples of the ultraviolet ray screening agent include an ultraviolet ray screening agent containing a metal atom, an ultraviolet ray screening agent containing a metal oxide, an ultraviolet ray screening agent having a benzotriazole structure (a benzotriazole compound), an ultraviolet ray screening agent having a benzophenone structure (a benzophenone compound), an ultraviolet ray screening agent having a triazine structure (a triazine compound), an ultraviolet ray screening agent having a malonic acid ester structure (a malonic acid ester compound), an ultraviolet ray screening agent having an oxanilide structure (an oxanilide compound), an ultraviolet ray screening agent having a benzoate structure (a benzoate compound), and the like.

Examples of the ultraviolet ray screening agent containing a metal atom include platinum particles, particles in which the surface of platinum particles is coated with silica, palladium particles, particles in which the surface of palladium particles is coated with silica, and the like. It is preferred that the ultraviolet ray screening agent not be heat shielding particles.

The ultraviolet ray screening agent is preferably an ultraviolet ray screening agent having a benzotriazole structure, an ultraviolet ray screening agent having a benzophenone structure, an ultraviolet ray screening agent having a triazine structure, or an ultraviolet ray screening agent having a benzoate structure. The ultraviolet ray screening agent is more preferably an ultraviolet ray screening agent having a benzotriazole structure or an ultraviolet ray screening agent having a benzophenone structure, and is further preferably an ultraviolet ray screening agent having a benzotriazole structure.

Examples of the ultraviolet ray screening agent containing a metal oxide include zinc oxide, titanium oxide, cerium oxide, and the like. Furthermore, with regard to the ultraviolet ray screening agent containing a metal oxide, the surface thereof may be coated with any material. Examples of the coating material for the surface of the ultraviolet ray screening agent containing a metal oxide include an insulating metal oxide, a hydrolyzable organosilicon compound, a silicone compound, and the like.

Examples of the insulating metal oxide include silica, alumina, zirconia, and the like. For example, the insulating metal oxide has a band-gap energy of 5.0 eV or more.

Examples of the ultraviolet ray screening agent having a benzotriazole structure include 2-(2'-hydroxy-5'-methylphenyl)benzotriazole ("Tinuvin P" available from BASF Japan Ltd.), 2-(2'-hydroxy-3',5'-di-t-butylphenyl)benzotriazole ("Tinuvin 320" available from BASF Japan Ltd.), 2-(2'-hydroxy-3'-t-butyl-5-methylphenyl)-5-chlorobenzotriazole ("Tinuvin 326" available from BASF Japan Ltd.), 2-(2'-hydroxy-3',5'-di-amylphenyl)benzotriazole ("Tinuvin 328" available from BASF Japan Ltd.), and the like. It is preferred that the ultraviolet ray screening agent be an ultraviolet ray screening agent having a benzotriazole structure containing a halogen atom, and it is more preferred that the ultraviolet ray screening agent be an ultraviolet ray screening agent having a benzotriazole structure containing a chlorine atom, because those are excellent in ultraviolet ray screening performance.

Examples of the ultraviolet ray screening agent having a benzophenone structure include octabenzone ("Chimassorb 81" available from BASF Japan Ltd.), and the like.

Examples of the ultraviolet ray screening agent having a triazine structure include "LA-F70" available from ADEKA CORPORATION, 2-(4,6-diphenyl-1,3,5-triazine-2-yl)-5-[(hexyl)oxy]-phenol ("Tinuvin 1577FF" available from BASF Japan Ltd.), and the like.

Examples of the ultraviolet ray screening agent having a malonic acid ester structure include dimethyl 2-(p-methoxybenzylidene)malonate, tetraethyl-2,2-(1,4-phenylenedimethylidene)bismalonate, 2-(p-methoxybenzylidene)-bis(1,2,2,6,6-pentamethyl-4-piperidinyl)malonate, and the like.

Examples of a commercial product of the ultraviolet ray screening agent having a malonic acid ester structure include Hostavin B-CAP, Hostavin PR-25 and Hostavin PR-31 (any of these is available from Clariant Japan K.K.).

Examples of the ultraviolet ray screening agent having an oxanilide structure include a kind of oxalic acid diamide having a substituted aryl group and the like on the nitrogen atom such as N-(2-ethylphenyl)-N'-(2-ethoxy-5-t-butylphenyl)oxalic acid diamide, N-(2-ethylphenyl)-N'-(2-ethoxy-phenyl)oxalic acid diamide and 2-ethyl-2'-ethoxy-oxanilide ("Sanduvor VSU" available from Clariant Japan K.K.).

Examples of the ultraviolet ray screening agent having a benzoate structure include 2,4-di-tert-butylphenyl-3,5-di-tert-butyl-4-hydroxybenzoate ("Tinuvin 120" available from BASF Japan Ltd.), and the like.

In 100% by weight of the interlayer film or in 100% by weight of a layer containing the ultraviolet ray screening agent (a first layer, a second layer, or a third layer), the content of the ultraviolet ray screening agent and the content of the benzotriazole compound are preferably 0.1% by weight or more, more preferably 0.2% by weight or more, further preferably 0.3% by weight or more, especially preferably 0.5% by weight or more. In 100% by weight of the interlayer film or in 100% by weight of a layer containing the ultraviolet ray screening agent (a first layer, a second layer, or a third layer), the content of the ultraviolet ray screening agent and the content of the benzotriazole compound are preferably

2.5% by weight or less, more preferably 2% by weight or less, further preferably 1% by weight or less, especially preferably 0.8% by weight or less. When the content of the ultraviolet ray screening agent is the above-described lower limit or more and the above-described upper limit or less, deterioration in visible light transmittance after a lapse of a period can be further suppressed. In particular, by setting the content of the ultraviolet ray screening agent to be 0.2% by weight or more in 100% by weight of a layer containing the ultraviolet ray screening agent, with regard to the interlayer film and laminated glass, the lowering in visible light transmittance thereof after the lapse of a certain period of time can be significantly suppressed.

(Oxidation inhibitor)

It is preferred that the interlayer film contain an oxidation inhibitor. It is preferred that the first layer contain an oxidation inhibitor. It is preferred that the second layer contain an oxidation inhibitor. It is preferred that the third layer contain an oxidation inhibitor. One kind of the oxidation inhibitor may be used alone, and two or more kinds thereof may be used in combination.

Examples of the oxidation inhibitor include a phenol-based oxidation inhibitor, a sulfur-based oxidation inhibitor, a phosphorus-based oxidation inhibitor, and the like. The phenol-based oxidation inhibitor is an oxidation inhibitor having a phenol skeleton. The sulfur-based oxidation inhibitor is an oxidation inhibitor containing a sulfur atom. The phosphorus-based oxidation inhibitor is an oxidation inhibitor containing a phosphorus atom.

It is preferred that the oxidation inhibitor be a phenol-based oxidation inhibitor or a phosphorus-based oxidation inhibitor.

Examples of the phenol-based oxidation inhibitor include 2,6-di-t-butyl-p-cresol (BHT), butyl hydroxyanisole (BHA), 2,6-di-t-butyl-4-ethylphenol, stearyl β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3' ,5'-butyl-4-hydroxyphenyl)propionate]methane, 1,3,3-tris-(2-methyl-4-hydroxy-5-t-butylphenol)butane, 1,3,5-trimethyl-2,4,6-tris(3,5-di-t-butyl-4-hydroxybenzyl)benzene, bis(3,3'-t-butylphenol)butyric acid glycol ester, bis(3-t-butyl-4-hydroxy-5-methylbenzenepropanoic acid)ethylenebis(oxyethylene), and the like. One kind or two or more kinds among these oxidation inhibitors are preferably used.

Examples of the phosphorus-based oxidation inhibitor include tridecyl phosphite, tris(tridecyl) phosphite, triphenyl phosphite, trinonylphenyl phosphite, bis(tridecyl)pentaerithritol diphosphite, bis(decyl)pentaerithritol diphosphite, tris(2,4-di-t-butylphenyl) phosphite, bis(2,4-di-t-butyl-6-methylphenyl)ethyl phosphate, 2,2'-methylenebis(4,6-di-t-butyl-1-phenyloxy)(2-ethylhexyloxy)phosphorus, and the like. One kind or two or more kinds among these oxidation inhibitors are preferably used.

Examples of a commercial product of the oxidation inhibitor include "IRGANOX 245" available from BASF Japan Ltd., "IRGAFOS 168" available from BASF Japan Ltd., "IRGAFOS 38" available from BASF Japan Ltd., "Sumilizer BHT" available from Sumitomo Chemical Co., Ltd., "IRGANOX 1010" available from BASF Japan Ltd., and the like.

With regard to the interlayer film and laminated glass, in order to maintain high visible light transmittance thereof over a long period of time, it is preferred that the content of the oxidation inhibitor be 0.1% by weight or more in 100% by weight of the interlayer film or in 100% by weight of the layer containing the oxidation inhibitor (a first layer, a second layer or a third layer). Moreover, since an effect commensurate with the addition of an oxidation inhibitor is not attained, it is preferred that the content of the oxidation inhibitor be 2% by weight or less in 100% by weight of the interlayer film or in 100% by weight of the layer containing the oxidation inhibitor.

(Other ingredients)

Each of the interlayer film, the first layer, the second layer, and the third layer may contain additives such as a coupling agent, a dispersing agent, a surfactant, a flame retardant, an antistatic agent, a pigment, a dye, an adhesivity adjusting agent other than metal salt, a moisture-resistance agent, a fluorescent brightening agent, and an infrared ray absorber, as necessary. One kind of these additives may be used alone, and two or more kinds thereof may be used in combination.

(Laminated glass)

Fig. 3 is a sectional view showing an example of laminated glass prepared with the interlayer film for laminated glass shown in Fig. 1.

A laminated glass 21 shown in Fig. 3 is provided with an interlayer film part 11X, a first lamination glass member 22, and a second lamination glass member 23. The interlayer film part 11X is arranged between the first lamination glass member 22 and the second lamination glass member 23 to be sandwiched therebetween. The first lamination glass member 22 is arranged on a first surface of the interlayer film part 11X. The second lamination glass member 23

is arranged on a second surface opposite to the first surface of the interlayer film part 11X. The interlayer film part 11A is formed of the interlayer film 11 shown in Fig. 1. The interlayer film part 11A includes a first layer 1X derived from the first layer 1, a second layer 2X derived from the second layer, and a third layer 3X derived from the third layer. The first layer 1X is formed of the first layer 1. The second layer 2X is formed of the second layer 2. The third layer 3X is formed of the third layer 3.

Examples of the lamination glass member include a glass plate, a PET (polyethylene terephthalate) film, and the like. As the laminated glass, laminated glass in which an interlayer film is sandwiched between a glass plate and a PET film or the like, as well as laminated glass in which an interlayer film is sandwiched between two glass plates, is included. The laminated glass is a laminate provided with a glass plate, and it is preferred that at least one glass plate be used. It is preferred that each of the first lamination glass member and the second lamination glass member be a glass plate or a PET (polyethylene terephthalate) film and the interlayer film include at least one glass plate as the first lamination glass member or the second lamination glass member. It is especially preferred that both of the first lamination glass member and the second lamination glass member be glass plates.

Examples of the glass plate include a sheet of inorganic glass and a sheet of organic glass. Examples of the inorganic glass include float plate glass, heat ray-absorbing plate glass, heat ray-reflecting plate glass, polished plate glass, figured glass, wired plate glass, green glass, and the like. The organic glass is synthetic resin glass substituted for inorganic glass. Examples of the organic glass include a polycarbonate plate, a poly(meth)acrylic resin plate, and the like. Examples of the poly(meth)acrylic resin plate include a polymethyl (meth)acrylate plate, and the like.

Although respective thicknesses of the first lamination glass member and the second lamination glass member are not particularly limited, the thickness is preferably 1 mm or more and is preferably 5 mm or less. When the lamination glass member is a glass plate, the thickness of the glass plate is preferably 1 mm or more and is preferably 5 mm or less. When the lamination glass member is a PET film, the thickness of the PET film is preferably 0.03 mm or more and is preferably 0.5 mm or less.

The method for producing the laminated glass is not particularly limited. First, the interlayer film is sandwiched between the first lamination glass member and the second lamination glass member to obtain a laminate. Then, for example, by passing the obtained laminate through pressure rolls or subjecting the obtained laminate to decompression suction in a rubber bag, the air remaining between the first lamination glass member and the interlayer film, and between the second lamination glass member and the interlayer film is removed. Then, the laminate is preliminarily bonded together at about 70 to 110°C to obtain a preliminarily press-bonded laminate. Next, by putting the preliminarily press-bonded laminate into an autoclave or by pressing the laminate, the laminate is press-bonded at about 120 to 150°C and under a pressure of 1 to 1.5 MPa. In this way, laminated glass can be obtained.

The laminated glass can be used for automobiles, railway vehicles, aircraft, ships, buildings, and the like. It is preferred that the laminated glass be laminated glass for building or for vehicles and it is more preferred that the laminated glass be laminated glass for vehicles. The laminated glass can also be used for applications other than these applications. The laminated glass can be used for a windshield, side glass, rear glass, or roof glass of an automobile, and the like. Since the laminated glass is high in heat shielding properties and is high in visible light transmittance, the laminated glass is suitably used for automobiles.

The laminated glass is a kind of laminated glass serving as a head-up display (HUD). In the laminated glass, measured information such as the speed which is sent from a control unit and the like can be projected onto the windshield from a display unit of the instrumental panel. As such, without making a driver of an automobile move his or her visual field downward, a front visual field and measured information can be visually recognized simultaneously.

Hereinafter, the present invention will be described in more detail with reference to examples and comparative examples. The present invention is not limited only to these examples.

In polyvinyl acetal resins used, n-butyraldehyde which has 4 carbon atoms is used for the acetalization. With regard to the polyvinyl acetal resin, the acetalization degree (the butyralization degree), the acetylation degree and the content of the hydroxyl group were measured by a method in accordance with JIS K6728 "Testing methods for polyvinyl butyral". In this connection, even in the cases of being measured according to ASTM D1396-92, numerical values similar to those obtained by a method in accordance with JIS K6728 "Testing methods for polyvinyl butyral" were exhibited.

(Example 1)

Preparation of composition for forming first layer:

The following ingredients were mixed, and kneaded sufficiently with a mixing roll to obtain a composition for forming a first layer. Other ingredients were added to the polyvinyl acetal resin.

Polyvinyl acetal resin (content of hydroxyl group: 22% by mole, acetylation degree: 13% by mole, acetalization degree: 65% by mole): 100 parts by weight
Triethylene glycol di-2-ethylhexanoate (3GO): 60 parts by weight

Tinuvin 326 (2-(2'-hydroxy-3'-t-butyl-5-methylphenyl)-5-chlorobenzotriazole, "Tinuvin 326" available from BASF Japan Ltd.): 0.2 parts by weight
BHT (2,6-di-t-butyl-p-cresol): 0.2 parts by weight

Preparation of composition for forming second layer and third layer:

The following ingredients were mixed, and kneaded sufficiently with a mixing roll to obtain a composition for forming a second layer and a third layer. Other ingredients were added to the polyvinyl acetal resin.
Polyvinyl acetal resin (content of hydroxyl group: 30.5% by mole, acetylation degree: 1% by mole, acetalization degree: 68.5% by mole): 100 parts by weight
Triethylene glycol di-2-ethylhexanoate (3GO): 38 parts by weight
Tinuvin 326 (2-(2'-hydroxy-3'-t-butyl-5-methylphenyl)-5-chlorobenzotriazole, "Tinuvin 326" available from BASF Japan Ltd.): 0.2 parts by weight
BHT (2,6-di-t-butyl-p-cresol): 0.2 parts by weight

Preparation of interlayer film before pressure-bonding:

The composition for forming the first layer, and the composition for forming the second layer and the third layer were coextruded by using a co-extruder. In Example 1, after extrusion molding of the interlayer film, the interlayer film was heated and retained at 100°C to 150°C for 5 minutes or less, and then returned to the normal temperature. A wedge-like interlayer film having a multilayer structure of the second layer/the first layer/the third layer was prepared. The interlayer film in each of the later-described Examples 2 to 12 and Comparative Examples 1 to 7 has a minimum thickness at one end and has a maximum thickness at the other end.

Preparation of laminate for measuring partial wedge angle including interlayer film after final pressure-bonding:

A first glass plate having the same size with the obtained interlayer film before pressure-bonding, and a thickness of 2 mm was prepared. A second glass plate having the same size with the obtained interlayer film before pressure-bonding, and a thickness of 2 mm was prepared. As the first glass plate and the second glass plate, float plate glass in accordance with JIS 3202-2011 was used. (First step) On the first glass plate, the interlayer film before pressure-bonding was placed from one surface side. Next, (Second step) on the interlayer film before pressure-bonding, the second glass plate was placed on the other surface of the interlayer film before pressure-bonding in such a manner that one end of the second glass plate was aligned with the one end of the interlayer film before pressure-bonding and the planar direction of the second glass plate was perpendicular to the planar direction of the first glass plate. Next, (Third step) the second glass plate was tilted while the one end of the second glass plate was fixed, and the surface of the second glass plate was brought into contact with the other surface of the interlayer film before pressure-bonding, and the second glass was made into the condition that the weight of the second glass was balanced on the other surface of the interlayer film before pressure-bonding. Then, (Fourth step) preliminary pressure-bonding was conducted with a roll press at 240°C and a linear pressure of 98 N/cm. Next, (Fifth step) final pressure-bonding was conducted at 140°C and a pressure of 1.3 MPa to give an interlayer film finally pressure-bonded. The obtained interlayer film finally pressure-bonded is in such a laminate state in which the interlayer film finally pressure-bonded is arranged between the first glass plate and the second glass plate.

(Examples 2 to 9, 11 and Comparative Examples 1 to 4, 6)

Preparation of interlayer film before pressure-bonding:

An interlayer film was obtained in the same manner as that in Example 1 except that those shown in the following Tables 1, 2 were employed for the following items.
Mixing amount of plasticizer relative to 100 parts by weight of polyvinyl acetal resin in composition for forming first layer, and in composition for forming second layer and third layer
Minimum thickness, maximum thickness, average rate of change in partial wedge angle, and maximum value of rate of change in partial wedge angle in interlayer film
Number of contact points after third step and before fourth step
In Examples 2 to 9, 11 and Comparative Examples 1 to 4, 6, the same kinds of the ultraviolet ray screening agent and the oxidation inhibitor as those in Example 1 were mixed in the same mixing amount as that in Example 1 (0.2 parts by weight relative to 100 parts by weight of the polyvinyl acetal resin). In examples and comparative examples, an interlayer film was extruded with dies having different shapes.

Preparation of laminate for measuring partial wedge angle including interlayer film after final pressure-bonding:

Using the obtained interlayer film before pressure-bonding, a laminate including an interlayer film after final pressure-bonding was prepared in the same manner as in Example 1.

(Example 10)

Preparation of composition for forming single-layered interlayer film:

The following ingredients were mixed, and kneaded sufficiently with a mixing roll to obtain a composition for forming a single-layered interlayer film. Other ingredients were added to the polyvinyl acetal resin.
Polyvinyl acetal resin (content of hydroxyl group: 30.5% by mole, acetylation degree: 1% by mole, acetalization degree: 68.5% by mole): 100 parts by weight
Triethylene glycol di-2-ethylhexanoate (3GO): 40 parts by weight
Tinuvin 326 (2-(2'-hydroxy-3'-t-butyl-5-methylphenyl)-5-chlorobenzotriazole, "Tinuvin 326" available from BASF Japan Ltd.): 0.2 parts by weight
BHT (2,6-di-t-butyl-p-cresol): 0.2 parts by weight

Preparation of single-layered interlayer film:

The composition for forming a single-layered interlayer film was extruded by using an extruder. After extrusion molding of the interlayer film, the interlayer film was heated and retained at 100°C to 150°C for 5 minutes or less, and then returned to the normal temperature.

Preparation of laminate for measuring partial wedge angle including interlayer film after final pressure-bonding:

Using the obtained interlayer film, a laminate for measuring partial wedge angle including an interlayer film after final pressure-bonding was prepared in the same manner as in Example 1.

(Example 12 and Comparative Example 5,7)

Preparation of interlayer film before pressure-bonding:

An interlayer film was obtained in the same manner as that in Example 10 except that those shown in the following Table 3 were employed for the following items.
Mixing amount of plasticizer relative to 100 parts by weight of polyvinyl acetal resin in interlayer film
Minimum thickness, maximum thickness, average rate of change in partial wedge angle, and maximum value of rate of change in partial wedge angle in interlayer film
Number of contact points after third step and before fourth step
In Example 12 and Comparative Examples 5, 7, the same kinds of the ultraviolet ray screening agent and the oxidation inhibitor as those in Example 10 were mixed in the same mixing amount as that in Example 10 (0.2 parts by weight relative to 100 parts by weight of the polyvinyl acetal resin). In examples and comparative examples, an interlayer film was extruded with dies having different shapes.

(Evaluation)

(1) Modulus of elasticity

For the second layer and the third layer in the interlayer film before pressure-bonding in Examples 1 to 9, 11 and Comparative Examples 1 to 4, 6, and the interlayer film before pressure-bonding in the Examples 10, 12 and Comparative Examples 5, 7, modulus of elasticity at 23°C was measured in the following manner.

Method for measuring modulus of elasticity:

A kneaded composition for forming a layer to be measured or an interlayer film was prepared. The kneaded composition was press-molded with a press molder at 150°C to obtain a resin film having a thickness of 0.35 mm. The obtained resin film was left to stand for 2 hours at 25°C and a relative humidity of 30%. After leaving to stand for 2 hours, viscoelasticity was measured using "ARES-G2" available from TA Instruments. As a jig, a parallel plate of 8 mm in

diameter was used. Measurement was performed under the condition in which the temperature was decreased from 30°C to -50°C at a temperature decreasing rate of 3°C/minute and under the condition of a frequency of 1 Hz and a strain of 1%.

Modulus of elasticity may be measured in the following manner. After storing the obtained interlayer film in an environment at a room temperature of 23 ± 2°C and a relative humidity of 25 ± 5% for one month, the second layer and the third layer are obtained by peeling the second layer and the third layer off from the interlayer film in an environment at a room temperature of 23 ± 2°C. The obtained second layer and third layer may be press molded at 150°C so that the thickness was 0.35 mm (at 150°C without pressurization for 10 minutes, at 150°C under pressurization for 10 minutes) to prepare a resin film.

(2) Rate of change in partial wedge angle

Measurement of partial wedge angle of interlayer film before pressure-bonding: Partial wedge angle was measured with "TOF-4R" available from Yamabun Electronics Co., Ltd. in the method as described above.

Measurement of partial wedge angle of interlayer film after final pressure-bonding: Partial wedge angle was measured with "OPTIGAUGE" available from Lumetrics, Inc. in the method as described above.

Each partial wedge angle was measured at each point of every 10 mm interval in a first region from the position of 40 mm from the one end toward the other end of the interlayer film to the middle position between the one end and the other end. Also, each partial wedge angle was measured at each point of every 10 mm interval in a second region from the position of 40 mm from the one end toward the other end of the interlayer film to the position of 40 mm from the other end toward the one end.

In the measurement in the first region, a rate of change in partial wedge angle at each point was determined according to the formula (X). In the measurement in the first region, an average rate of change in partial wedge angle was determined according to the formula (Y).

In the measurement in the second region, a rate of change in partial wedge angle at each point was determined according to the formula (X). In the measurement in the second region, the maximum value among the values of rate of change in partial wedge angle was regarded as the maximum value of rate of change in partial wedge angle.

(3) Double images

The obtained laminate was installed at a position of the windshield. The information to be displayed, which is emitted from a display unit installed below the laminate, was reflected by the sheet of laminated glass to visually confirm the presence or absence of double images at a prescribed position (the entire region for display). The double images were judged according to the following criteria.

[Criteria for judgment in double images]

○○: Double images are not confirmed.
○: Double images are confirmed very slightly and are at a level causing no problem in practical use.
×: Not corresponding to the criteria of ○○ and ○.

The details and the results are shown in the following Tables 1 to 3.

[Table 1]

| | | | Example 1 | Example 2 | Example 3 | Comparative Example 1 | Example 4 | Example 5 | Example 6 | Example 7 |
|---|---|---|---|---|---|---|---|---|---|---|
| Content of plasticizer relative to 100 parts by weight of polyvinyl acetal resin in first layer (parts by weight) | | | 60 | 60 | 60 | 60 | 95 | 95 | 95 | 95 |
| Content of plasticizer relative to 100 parts by weight of polyvinyl acetal resin in second layer and third layer (parts by weight) | | | 38 | 38 | 38 | 38 | 35 | 35 | 35 | 35 |
| Minimum thickness in interlayer film | | μm | 800 | 800 | 800 | 800 | 800 | 800 | 800 | 800 |
| Maximum thickness in interlayer film | | μm | 1200 | 1200 | 1200 | 1200 | 1200 | 1200 | 1200 | 1200 |
| Evaluation | Modulus of elasticity at 23°C of second layer and third layer | MPa | 8.8 | 8.8 | 8.8 | 8.8 | 20 | 20 | 20 | 20 |
| | First region: average rate of change in partial wedge angle | % | 5 | 3 | 1 | 13 | 3 | 1 | 6 | 6 |
| | Second region: maximum value of rate of change in partial wedge angle | % | 10 | 7 | 5 | 18 | 4 | 2 | 8 | 8 |
| | After third step and before fourth step: Number of contact points in region from position of one end of interlayer film to middle position between one end and other end | point (s) | 2 | 2 | 2 | 1 | 2 | 2 | 1 | 0 |
| | After third step and before fourth step: Number of contact points in region from middle position between one end and other end of interlayer film to position of other end | point (s) | 0 | 1 | 2 | 0 | 1 | 2 | 0 | 1 |
| | After third step and before fourth step: Number of contact points in entire region from position of one end to position of other end of interlayer film | point (s) | 2 | 3 | 4 | 1 | 3 | 4 | 1 | 1 |
| | Double images | | ○ | ○○ | ○○ | × | ○○ | ○○ | ○ | ○ |

[Table 2]

| | | | Comparative Example 2 | Comparative Example 3 | Example 8 | Example 9 | Comparative Example 4 | Example 11 | Comparative Example 6 |
|---|---|---|---|---|---|---|---|---|---|
| Content of plasticizer relative to 100 parts by weight of polyvinyl acetal resin in first layer (parts by weight) | | | 43 | 43 | 43 | 43 | 43 | 36 | 36 |
| Content of plasticizer relative to 100 parts by weight of polyvinyl acetal resin in second layer and third layer (parts by weight) | | | 40 | 40 | 40 | 40 | 40 | 41 | 41 |
| Minimum thickness in interlayer film | | μm | 800 | 800 | 800 | 800 | 800 | 800 | 800 |
| Maximum thickness in interlayer film | | μm | 1200 | 1200 | 1200 | 1200 | 1200 | 1200 | 1200 |
| Evaluation | Modulus of elasticity at 23°C of second layer and third layer | MPa | 4 | 4 | 4 | 4 | 4 | 2 | 2 |
| | First region: average rate of change in partial wedge angle | % | 13 | 12 | 10 | 8 | 11 | 7 | 12 |
| | Second region: maximum value of rate of change in partial wedge angle | % | 20 | 20 | 10 | 9 | 15 | 8 | 15 |
| | After third step and before fourth step: Number of contact points in region from position of one end of interlayer film to middle position between one end and other end | point(s) | 1 | 0 | 2 | 2 | 2 | 2 | 1 |
| | After third step and before fourth step: Number of contact points in region from middle position between one end and other end of interlayer film to position of other end | point (s) | 0 | 1 | 1 | 2 | 0 | 2 | 0 |
| | After third step and before fourth step: Number of contact points in entire region from position of one end to position of other end of interlayer film | point(s) | 1 | 1 | 3 | 4 | 2 | 4 | 1 |
| | Double images | | × | × | ○ | ○ | × | ○ | × |

[Table 3]

| | | | Example 10 | Comparative Example 5 | Example 12 | Comparative Example 7 |
|---|---|---|---|---|---|---|
| Content of plasticizer relative to 100 parts by weight of polyvinyl acetal resin in interlayer film (parts by weight) | | | 40 | 40 | 41 | 41 |
| Minimum thickness in interlayer film | | μm | 800 | 800 | 800 | 800 |
| Maximum thickness in interlayer film | | μm | 1200 | 1200 | 1200 | 1200 |
| Evaluation | Modulus of elasticity at 23°C of interlayer film | MPa | 4 | 4 | 2 | 2 |
| | First region: average rate of change in partial wedge angle | % | 7 | 11 | 6 | 11 |
| | Second region: maximum value of rate of change in partial wedge angle | % | 8 | 14 | 8 | 12 |
| | After third step and before fourth step: Number of contact points in region from position of one end of interlayer film to middle position between one end and other end | point (s) | 2 | 2 | 2 | 1 |
| | After third step and before fourth step: Number of contact points in region from middle position between one end and other end of interlayer film to position of other end | point (s) | 2 | 0 | 2 | 0 |
| | After third step and before fourth step: Number of contact points in entire region from position of one end to position of other end of interlayer film | point (s) | 4 | 2 | 4 | 1 |
| | Double images | | ○ | × | ○ | × |

In this connection, sheets of laminated glass prepared with interlayer films obtained in Examples 1 to 9, 11 respectively were evaluated for the sound insulating properties with sound transmission losses, and as a result, it was confirmed that the sheets of laminated glass were excellent in sound insulating properties.

**EXPLANATION OF SYMBOLS**

1, 1A, 1X: First layer
1Aa: Portion having sectional shape in thickness direction of rectangular shape
1Ab: Portion having sectional shape in thickness direction of wedge-like shape
2, 2X: Second layer
3, 3X: Third layer
11, 11A: Interlayer film
11X: Interlayer film part
11a: One end
11b: Other end
11Aa: Portion having sectional shape in thickness direction of rectangular shape

11Ab: Portion having sectional shape in thickness direction of wedge-like shape
21: Laminated glass
22: First lamination glass member
23: Second lamination glass member
R1: Region for display
R2: Surrounding region
R3: Shading region
51: Roll body
61: Winding core

**Claims**

**1.** An interlayer film for laminated glass to be used in laminated glass, the interlayer film comprising:

one end, and the other end being at the opposite side of the one end,
the other end having a thickness larger than that of the one end,
the thickness of the interlayer film not increasing evenly from the one end to the other end,
an average rate of change in partial wedge angle determined by the following formula (X) being 10% or less when an interlayer film finally pressure-bonded is obtained through the following first, second, third, fourth and fifth steps in this order by using the interlayer film for laminated glass as an interlayer film before pressure-bonding, and in each of the interlayer film before pressure-bonding and the interlayer film after final pressure-bonding, each partial wedge angle at each point of every 10 mm intervals in a first region from a position of 40 mm from the one end toward the other end of the interlayer film, to a middle position between the one end and the other end is measured.

Rate of change in partial wedge angle (%) = |(Partial wedge angle of interlayer film after final pressure-bonding - Partial wedge angle of interlayer film before pressure-bonding)/(Partial wedge angle of interlayer film before pressure-bonding)| × 100 ··· Formula (X)

First step: Place an interlayer film before pressure-bonding on a first glass plate from one surface side. The first glass plate has the same size as the interlayer film before pressure-bonding, and has a thickness of 2 mm. The first glass plate is a float plate glass in accordance with JIS 3202-2011.
Second step: Place a second glass plate on the other surface of the interlayer film in such a manner that one end of the second glass plate is aligned with the one end of the interlayer film and the planar direction of the second glass plate is perpendicular to the planar direction of the first glass plate. The second glass plate has the same size as the interlayer film before pressure-bonding, and has a thickness of 2 mm. The second glass plate is a float plate glass in accordance with JIS 3202-2011.
Third step: Tilt the second glass plate while fixing the one end of the second glass plate to bring the surface of the second glass plate into contact with the other surface of the interlayer film, and make the second glass into the condition that the weight of the second glass is balanced on the other surface of the interlayer film.
Fourth step: Preliminarily pressure bond with a roll press at 240°C and a linear pressure of 98 N/cm.
Fifth step: Finally pressure bond at 140°C and a pressure of 1.3 MPa to give an interlayer film finally pressure-bonded. The obtained interlayer film finally pressure-bonded is in such a laminate state in which the interlayer film finally pressure-bonded is arranged between the first glass plate and the second glass plate.

**2.** The interlayer film for laminated glass according to claim 1, wherein when each partial wedge angle is measured at each point of every 10 mm interval in a second region from a position of 40 mm from the one end toward the other end, to a position of 40 mm from the other end toward the one end of the interlayer film, a maximum value of the rate of change in partial wedge angle determined by the formula (X) is 15% or less.

3. The interlayer film for laminated glass according to claim 1 or 2, wherein the interlayer film is an interlayer film for laminated glass in which the interlayer film and the second glass plate are in contact with each other at separated two or more points in a region from the position of the one end of the interlayer film to the middle position between the one end and the other end, after the third step and before the fourth step in obtaining an interlayer film finally pressure-bonded thorough the first, second, third, fourth and fifth steps in this order.

4. The interlayer film for laminated glass according to any one of claims 1 to 3, wherein the interlayer film is an interlayer film for laminated glass in which the interlayer film and the second glass plate are in contact with each other at separated three or more points in a region from the position of the one end to the position of the other end of the interlayer film, after the third step and before the fourth step in obtaining an interlayer film finally pressure-bonded thorough the first, second, third, fourth and fifth steps in this order.

5. The interlayer film for laminated glass according to any one of claims 1 to 4, having a layer having a modulus of elasticity G' at 23°C of 4 MPa or more.

6. The interlayer film for laminated glass according to any one of claims 1 to 4, having a layer having a modulus of elasticity G' at 23°C of 4 MPa or more as a surface layer.

7. The interlayer film for laminated glass according to any one of claims 1 to 6, further containing a thermoplastic resin.

8. The interlayer film for laminated glass according to any one of claims 1 to 7, further containing a plasticizer.

9. The interlayer film for laminated glass according to any one of claims 1 to 8, wherein the interlayer film includes a layer containing a thermoplastic resin, and a plasticizer in a content of 25 parts by weight or more and 45 parts by weight or less, relative to 100 parts by weight of the thermoplastic resin.

10. The interlayer film for laminated glass according to any one of claims 1 to 9, further comprising:

a first layer; and
a second layer arranged on a first surface side of the first layer.

11. The interlayer film for laminated glass according to claim 10, wherein
the first layer contains a polyvinyl acetal resin,
the second layer contains a polyvinyl acetal resin, and
a content of a hydroxyl group of the polyvinyl acetal resin in the first layer is lower than a content of a hydroxyl group of the polyvinyl acetal resin in the second layer.

12. The interlayer film for laminated glass according to claim 10 or 11, wherein
the first layer contains a polyvinyl acetal resin,
the second layer contains a polyvinyl acetal resin,
the first layer contains a plasticizer,
the second layer contains a plasticizer, and
a content of the plasticizer in the first layer relative to 100 parts by weight of the polyvinyl acetal resin in the first layer is larger than a content of the plasticizer in the second layer relative to 100 parts by weight of the polyvinyl acetal resin in the second layer.

13. A laminated glass, comprising:

a first lamination glass member;
a second lamination glass member; and
an interlayer film part being arranged between the first lamination glass member and the second lamination glass member,
the interlayer film part being formed of the interlayer film for laminated glass according to any one of claims 1 to 12.

[FIG. 1.]

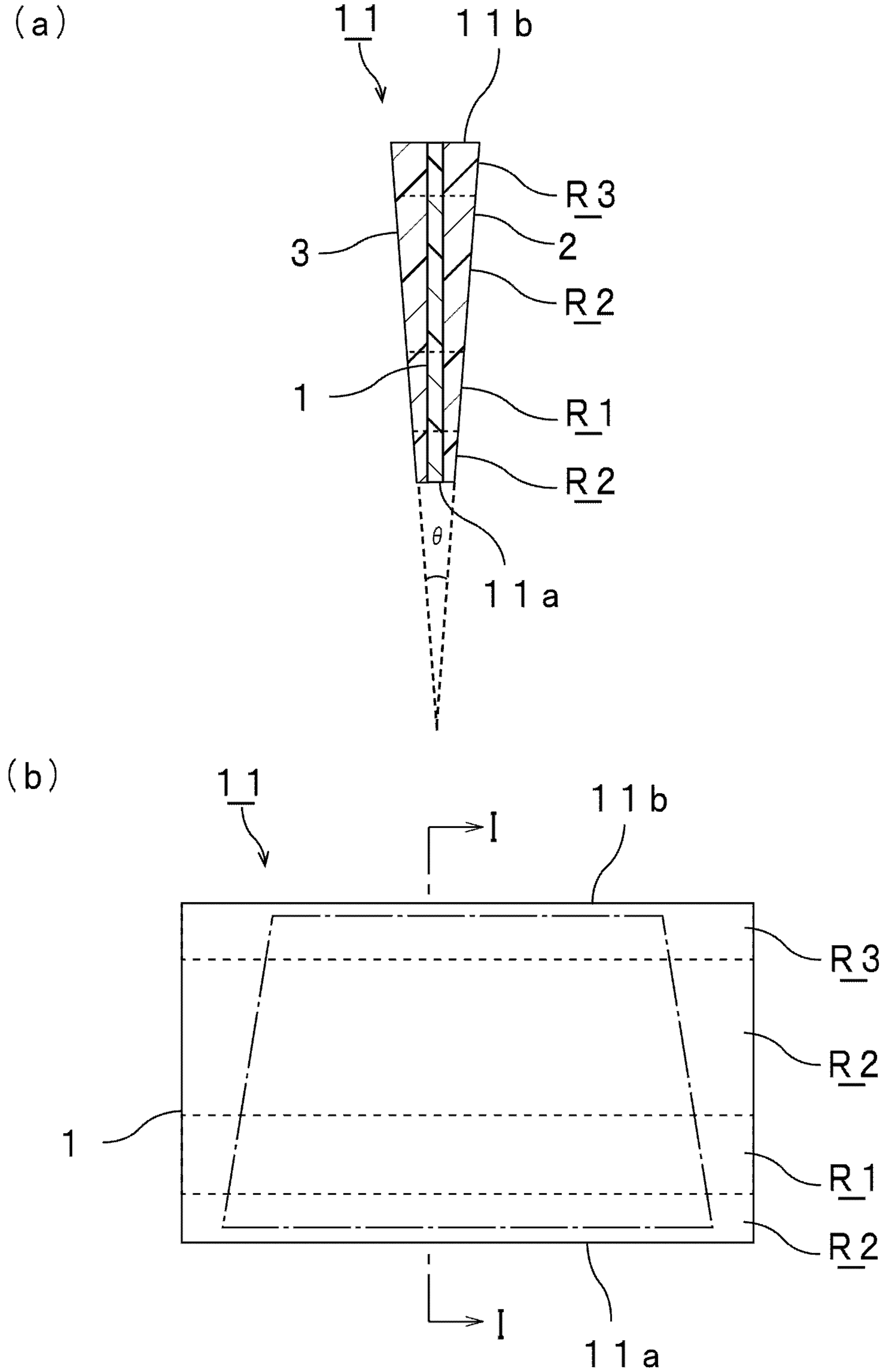

[FIG. 2.]

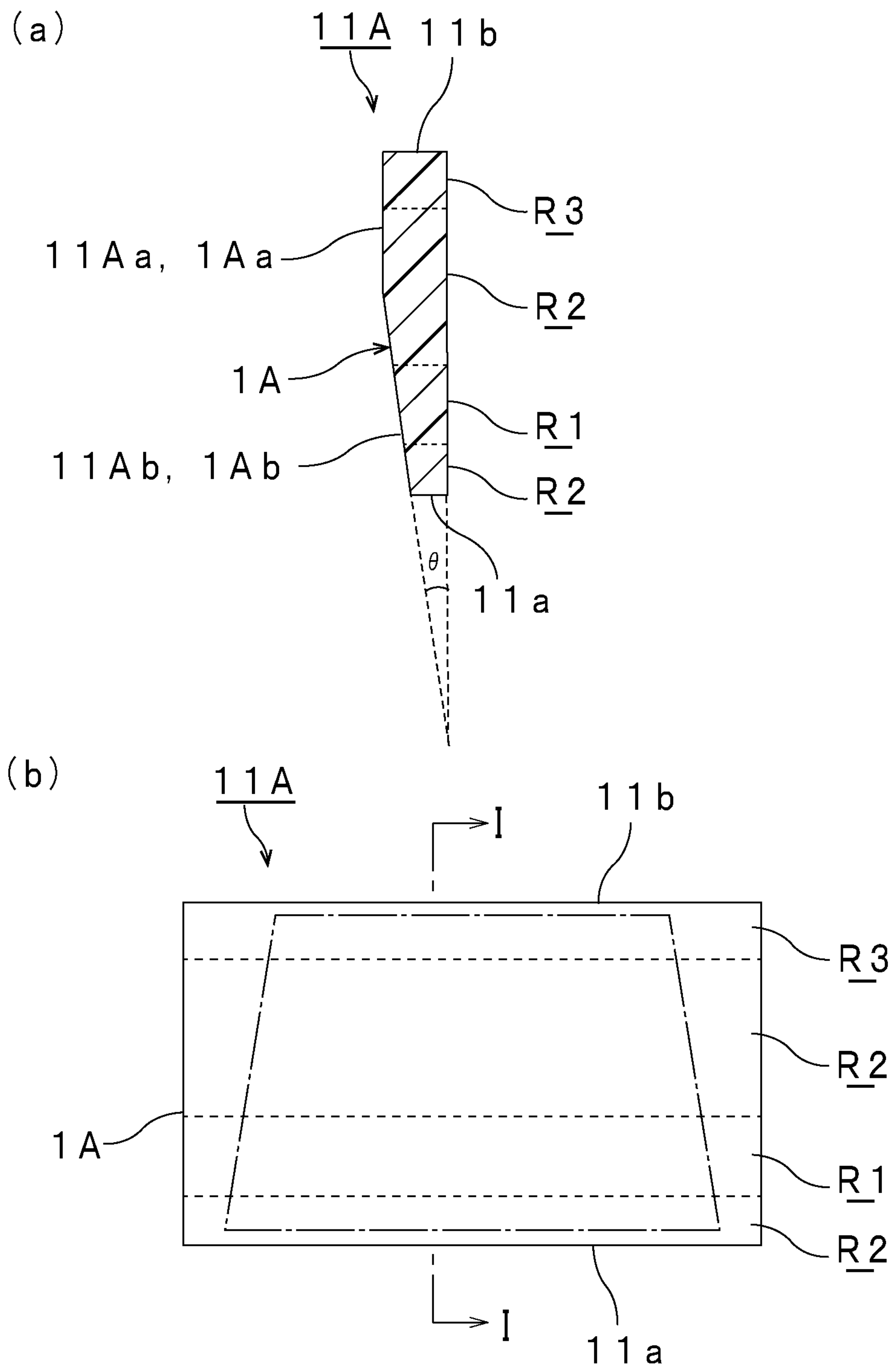
(a)
11A
11b
R3
11Aa, 1Aa
R2
1A
R1
11Ab, 1Ab
R2
θ
11a
(b)
11A
I
11b
R3
R2
1A
R1
R2
I
11a

[FIG. 3.]

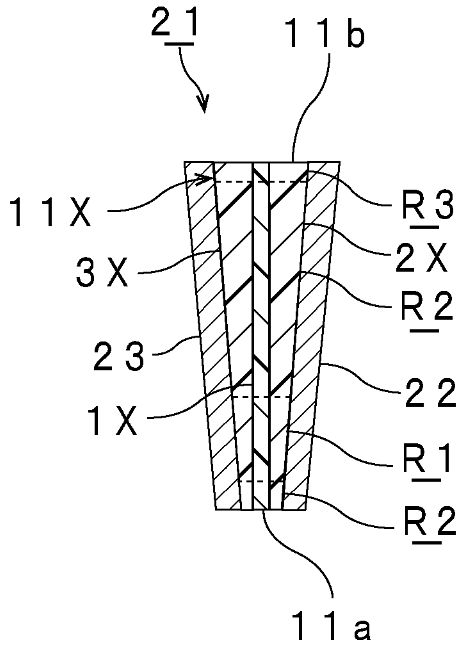


[FIG. 4.]

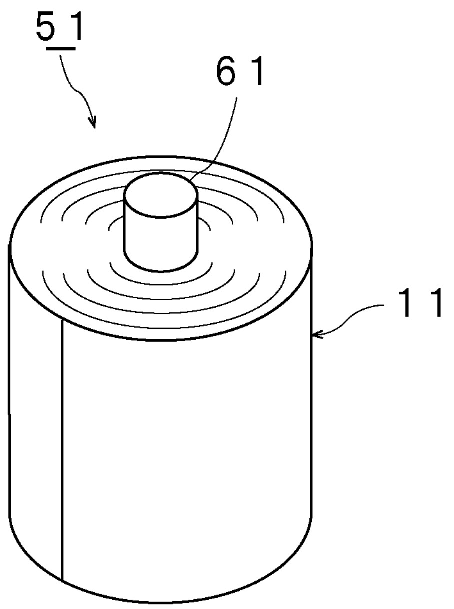

**INTERNATIONAL SEARCH REPORT**

International application No. PCT/JP2018/009895

A. CLASSIFICATION OF SUBJECT MATTER
Int.Cl. C03C27/12(2006.01)i, B32B17/10(2006.01)i, B32B27/30(2006.01)i, B60J1/02(2006.01)n

According to International Patent Classification (IPC) or to both national classification and IPC

B. FIELDS SEARCHED

Minimum documentation searched (classification system followed by classification symbols)
Int.Cl. C03C27/12, B32B1/00-43/00, B60J1/02

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2011-505330 A (SAINT GOBAIN GLASS FRANCE) 24 February 2011, claims, paragraphs [0018], [0019], [0038], [0039], [0064]-[0066], drawings & WO 2009/071135 A1, claims, specification, page 5, lines 1-12, page 10, lines 13-27, page 15, lines 1-15, drawings & EP 2217438 A1 & US 2010/0314900 A1 & DE 102007059323 A1 & CN 101888927 A & KR 10-2010-0094987 A | 13<br>1-12 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 27.04.2018 | 15.05.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

INTERNATIONAL SEARCH REPORT

International application No.
PCT/JP2018/009895

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 2004-536009 A (DU PONT) 02 December 2004, claims, paragraphs [0016]-[0019], drawings & US 2004/0166288 A1, claims, paragraphs [0025]-[0028], drawings & WO 2002/103434 A1 & EP 1395867 A1 & CN 1537247 A | 13<br>1-12 |
| X<br>A | WO 2016/052422 A1 (SEKISUI CHEMICAL CO., LTD.) 07 April 2016, claims, paragraphs [0025], [0054], [0168]-[0173], drawings & EP 3202730 A1, claims, paragraphs [0025], [0054], [0167], [0168], tables 1-3, drawings & US 2017/0274630 A1 & CN 106604904 A | 13<br>1-12 |
| A | WO 2016/094239 A1 (SOLUTIA INC.) 16 June 2016, claims, paragraphs [0043], [0104]-[0120], drawings & EP 3230369 A1 & US 2016/0168353 A1 & CN 107000386 A | 1-13 |
| P, X<br>P, A | WO 2017/126468 A1 (SEKISUI CHEMICAL CO., LTD.) 27 July 2017, claims, examples, drawings (Family: none) | 13<br>1-12 |
| P, A | JP 2017-105665 A (ASAHI GLASS CO., LTD.) 15 June 2017, paragraphs [0001]-[0008], [0042]-[0044], [0047]-[0049], [0056] (Family: none) | 1-13 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H4502525 T